# EUROPÄISCHE PATENTSCHRIFT

(11) **EP 3 864 634 B1**
(45) Veröffentlichungstag und Bekanntmachung des Hinweises auf die Patenterteilung: **08.07.2026**
(21) Anmeldenummer: 19779518.0
(22) Anmeldetag: 07.10.2019
(51) Int. Cl.: G07C 9/37, G07C 9/38, G06Q 10/02, G07C 9/00, G07C 9/25, G07C 9/27

(54) **BESUCHERVERWALTUNGSSYSTEM**
VISITOR MANAGING SYSTEM
SYSTÈME DE GESTION DES VISITEURS

(30) Priorität: 12.10.2018 EP 18200139
(43) Veröffentlichungstag der Anmeldung: 18.08.2021
(73) Patentinhaber: Currenta GmbH & Co. OHG, 51373 Leverkusen (DE)
(72) Erfinder: TEERMANN, Ilka, 59227 Ahlen (DE); BEYER, Joachim, 51515 Kürten (DE); BIYDA, Andrea, 51377 Leverkusen (DE); CETIN, Sertan-Soner, 95425 Unna (DE); DOHMSTREICH, Andreas, 50823 Köln (DE); GÖRING, Hans-Jürgen, 41541 Dormagen (DE); LANGHIRT, Benjamin, 40789 Monheim (DE); SCHUBERT, Linda, 50169 Kerpen (DE)
(74) Vertreter: Michalski Hüttermann & Partner mbB
(86) Internationale Anmeldenummer: PCT/EP2019/077021
(87) Internationale Veröffentlichungsnummer: WO 2020/074413

(56) Entgegenhaltungen:
- EP-A1- 1 032 923
- EP-A1- 3 522 121
- DE-A1- 102016 117 491
- US-A1- 2005 240 453
- US-A1- 2010 144 373
- US-A1- 2017 140 584
- NEIL CROFT: "On forensics: A silent SMS attack", INFORMATION SECURITY FOR SOUTH AFRICA (ISSA), 2012, IEEE, 15 August 2012 (2012-08-15), pages 1 - 4, XP032258543, ISBN: 978-1-4673-2160-0, DOI: 10.1109/ISSA.2012.6320454

## Beschreibung

Die vorliegende Erfindung betrifft das technische Gebiet der Verwaltung von Besuchern, die Zutritt zu einem geschützten Bereich wünschen oder benötigen. Gegenstände der vorliegenden Erfindung sind ein System, ein Verfahren und ein Computerprogrammprodukt zur Besucherverwaltung.

Viele Unternehmen empfangen täglich Besucher, die nicht zum Unternehmen gehören, wie beispielsweise Geschäftspartner, Kunden, Bewerber, Dienstleister oder dergleichen. Dabei gewähren die Unternehmen solchen Besuchern Zutritt zu Gebäuden oder Bereichen, die für die Öffentlichkeit üblicherweise nicht frei zugänglich sind, z.B., weil dort erhöhte Sicherheitsbestimmungen gelten, um Beschädigungen zu vermeiden, Diebstahl zu verhindern, Einblicke in Betriebsgeheimnisse zu unterbinden u.v.m.

Zutrittskontrollsysteme helfen, den Zutritt zu regeln und nur berechtigten Personen Zutritt zu gewähren. Solche Systeme sind im Stand der Technik beschrieben (siehe z.B. DE102009010587A1, WO0182236A1 und US2018174384). Aus der US2017/140584A1 geht ein Sicherheitskontrollsystem, das konfiguriert ist, um einem Besucher Zugang zu einem Gebäude zu gewähren, und ein Sicherheitskontrollverfahren dafür hervor. Die EP3522121A1 offenbart ein Personenzutrittskontrollverfahren an einem Flughafen mit Abgleich eines Lichtbildes eines Reisepasses mit einem aufgenommenen Bild.

Nachteilig an den bestehenden Systemen ist der erhöhte Aufwand insbesondere beim Eintreffen eines Besuchers. Üblicherweise muss sich ein Besucher beim Besucherempfang anmelden; üblicherweise erhält er einen Besucherausweis und der Einladende wird benachrichtigt, dass der Besucher angekommen ist, um ihn abzuholen oder zu bestätigen, dass der Besucher eingeladen ist. Dabei kommt es sehr oft zu Wartezeiten, z.B. dann, wenn eine Mehrzahl an Besuchern gleichzeitig eintrifft, oder wenn der Einladende nicht erreicht werden kann oder dergleichen. Dies kann bei Besuchern zu Unmut führen. Auf der anderen Seite muss jedoch gewährleistet sein, dass sich keine Person unberechtigten Zutritt verschafft.

Ausgehend vom beschriebenen Stand der Technik bestand die objektive technische Aufgabe darin, ein Besucherverwaltungssystem bereitzustellen, das berechtigten Besuchern einen schnellen und unkomplizierten Zutritt zu geschützten Bereichen gewährt, ohne dass dabei Kompromisse in Bezug auf die Sicherheit eingegangen werden.

Diese Aufgabe wir durch die Gegenstände der unabhängigen Patentansprüche gelöst. Bevorzugte Ausführungsformen finden sich in den abhängigen Patentansprüchen, in der vorliegenden Beschreibung und in den Figuren.

Ein erster Gegenstand der vorliegenden Erfindung ist ein System umfassend
- eine Verwaltungseinheit,
- eine Registrierungseinheit und
- eine Besucherempfangseinheit,

wobei die Verwaltungseinheit konfiguriert ist, mindestens einem Besucher eines Ereignisses eine elektronische Nachricht zu übermitteln, wobei die elektronische Nachricht dem mindestens einen Besucher über ein Netzwerk einen Zugang zu der Registrierungseinheit ermöglicht, wobei das Ereignis mindestens durch einen Ereignisort und durch eine Ereignisanfangszeit gekennzeichnet ist,
wobei die Registrierungseinheit konfiguriert ist, von dem mindestens einen Besucher über das Netzwerk Identitätsdaten zu empfangen, und den mindestens einen Besucher für das Ereignis zu registrieren,
wobei die Besucherempfangseinheit in einer Umgebung zum Ereignisort stationiert ist und konfiguriert ist,
   - von dem mindestens einen Besucher Daten zu empfangen, wenn der mindestens eine Besucher zu einer Besuchszeit die Besuchsempfangseinheit aufsucht,
   - anhand der empfangenen Daten die Identität des mindestens einen Besuchers festzustellen,
   - anhand der empfangenen Daten die Authentizität des mindestens einen Besuchers festzustellen,
   - zu prüfen, ob der mindestens eine Besucher für das Ereignis registriert ist,
   - eine Zeitspanne zwischen der Ereignisanfangszeit und der Besuchszeit zu ermitteln,
   - die Zeitspanne mit einem Schwellenwert zu vergleichen, und
   - für den Fall, dass die Zeitspanne den Schwellenwert nicht überschreitet, der mindestens eine Besucher identifiziert und authentifiziert ist und der mindestens eine Besucher für das Ereignis registriert ist, für den mindestens einen Besucher eine Zutrittsfreigabe zu erteilen.

Ein weiterer Gegenstand der vorliegenden Erfindung ist ein Verfahren zur Verwaltung des Zutritts mindestens eines Besuchers zu einem geschützten Bereich, wobei das Verfahren die folgenden Schritte umfasst:
- Übermitteln einer elektronischen Mitteilung an mindestens einen Besucher eines Ereignisses, wobei die Mitteilung dem mindestens einen Besucher über ein Netzwerk einen Zugang zu einer Registrierungseinheit verschafft, wobei das Ereignis mindestens durch einen Ereignisort und durch eine Ereignisanfangszeit gekennzeichnet ist, wobei der Ereignisort in dem geschützten Bereich liegt,
- Empfangen von Identitätsdaten des mindestens einen Besuchers über das Netzwerk durch die Registrierungseinheit,
- Registrieren des mindestens einen Besuchers für das Ereignis durch die Registrierungseinheit,
- Erzeugen eines Ereignisdatensatzes auf Basis der von dem mindestens einen Besucher übermittelten Identitätsdaten,
- Übermitteln des Ereignisdatensatzes an eine Besucherempfangseinheit, wobei die Besucherempfangseinheit in einer Umgebung zum Ereignisort stationiert ist,
- Empfangen von Daten des mindestens einen Besuchers durch die Besucherempfangseinheit, wenn der mindestens eine Besucher die Besuchsempfangseinheit zu einer Besuchszeit aufsucht,
- Identifizieren des mindestens einen Besuchers anhand der empfangenen Daten,
- Authentifizieren des mindestens einen Besuchers anhand der empfangenen Daten,
- Prüfen, ob der mindestens eine Besucher für das Ereignis registriert ist,
- Ermitteln einer Zeitspanne zwischen der Ereignisanfangszeit und der Besuchszeit,
- Vergleichen der Zeitspanne mit einem Schwellenwert, und
- Erteilen einer Zutrittsfreigabe für den mindestens einen Besucher für den Fall, dass die Zeitspanne den Schwellenwert nicht überschreitet, der mindestens eine Besucher identifiziert und authentifiziert ist und der mindestens eine Besucher für das Ereignis registriert ist.

Ein weiterer Gegenstand der vorliegenden Erfindung ist ein Computerprogrammprodukt umfassend einen Programmcode, der auf einem Datenträger gespeichert ist, und der ein System umfassend eine Verwaltungseinheit, eine Registrierungseinheit und eine Besucherempfangseinheit dazu veranlasst, die folgenden Schritte auszuführen, wenn der Programmcode in den Arbeitsspeichern der genannten Einheiten geladen ist,
- Übermitteln einer elektronischen Mitteilung an mindestens einen Besucher eines Ereignisses, wobei die Mitteilung dem mindestens einen Besucher über ein Netzwerk einen Zugang zu einer Registrierungseinheit verschafft, wobei das Ereignis mindestens durch einen Ereignisort und durch eine Ereignisanfangszeit gekennzeichnet ist,
- Empfangen von Identitätsdaten des mindestens einen Besuchers über das Netzwerk durch die Registrierungseinheit,
- Erzeugen eines Ereignisdatensatzes auf Basis der von dem mindestens einen Besucher übermittelten Identitätsdaten,
- Übermitteln des Ereignisdatensatzes an die Besucherempfangseinheit,
- Empfangen von Daten des mindestens einen Besuchers durch die Besucherempfangseinheit, wenn der mindestens eine Besucher zu einer Besuchszeit die Besuchsempfangseinheit aufsucht,
- Identifizieren des mindestens einen Besuchers anhand der empfangenen Daten,
- Authentifizieren des mindestens einen Besuchers anhand der empfangenen Daten,
- Prüfen, ob der mindestens eine Besucher für das Ereignis registriert ist,
- Ermitteln einer Zeitspanne zwischen der Ereignisanfangszeit und der Besuchszeit,
- Vergleichen der Zeitspanne mit einem Schwellenwert, und
- Erteilen einer Zutrittsfreigabe für den mindestens einen Besucher für den Fall, dass die Zeitspanne den Schwellenwert nicht überschreitet, der mindestens eine Besucher identifiziert und authentifiziert ist und der mindestens eine Besucher für das Ereignis registriert ist.

Die Erfindung wird nachstehend näher erläutert, ohne zwischen den Erfindungsgegenständen (System, Verfahren, Computerprogrammprodukt) zu unterscheiden. Die nachfolgenden Erläuterungen sollen vielmehr für alle Erfindungsgegenstände (System, Verfahren, Computerprogrammprodukt) in analoger Weise gelten, unabhängig davon, in welchem Kontext sie erfolgen.

Wenn in der vorliegenden Beschreibung Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die vorliegende Erfindung dient der Verwaltung und der Kontrolle des Zutritts mindestens eines Besuchers zu einem geschützten Bereich.

Ein "Besucher" im Sinne der vorliegenden Erfindung ist eine natürliche Person, die Zutritt zu einem geschützten Bereich begehrt oder benötigt und deren Identität, Authentizität und Berechtigung zum Zutritt des geschützten Bereiches vorab festgestellt wird. In der vorliegenden Beschreibung wird der Besucher auch als externer Teilnehmer eines Ereignisses bezeichnet, das in einem geschützten Bereich stattfindet. Ein externer Teilnehmer unterscheidet sich von einem internen Teilnehmer dadurch, dass der externe Teilnehmer eine Zulassung (Zutrittsfreigabe) für den Zutritt zu dem geschützten Bereich benötigt, während ein interner Teilnehmer eine solche Zulassung bereits besitzt.

In einer bevorzugten Ausführungsform handelt es sich bei einem internen Teilnehmer um einen Angehörigen (z.B. einen Angestellten oder ein Mitglied oder dergleichen) einer (rechtlichen) Einheit (z.B eines Unternehmens oder einer Institution oder eines Vereins oder dergleichen). Ein Besucher ist hingegen kein Angehöriger der Einheit.

Unter einem "geschützten Bereich" wird ein Bereich verstanden, der für die Öffentlichkeit nicht frei zugänglich ist. Der Schutzbedarf kann sich beispielsweise aus erhöhten Sicherheitsbestimmungen ergeben. So gehen zum Beispiel von Produktionsanlagen, Umspannwerken, Recyclinghöfen, Umladestationen, Lagerstätten und dergleichen Gefahren für Menschen aus, weswegen Personen, die keine entsprechende Sicherheitseinweisung erhalten haben und/oder keine entsprechenden Sicherheitsmaßnahmen ergriffen haben (z.B. das Tragen von Schutzkleidung) überhaupt nicht oder nicht unbeaufsichtigt einen solchen Bereich betreten dürfen/sollten. Der Schutzbedarf kann sich aber auch dadurch ergeben, dass der Bereich vor Vandalismus, Diebstahltatbeständen oder dergleichen geschützt werden soll. Der Schutzbereich kann sich auch dadurch ergeben, dass der Bereich vor Industriespionage geschützt werden soll. Weitere Gründe sind denkbar.

Unter dem Begriff "Bereich" kann ein Gebäude, ein Raum eines Gebäudes, ein Firmengelände, ein Produktionsstandort, ein Areal oder dergleichen verstanden werden. Üblicherweise ist der Bereich nur über ausgewiesene Zutrittsmöglichkeiten (Zugänge, Ein-/Ausgänge), die über Zutrittskontrolleinheiten verfügen, betretbar und/oder befahrbar. Eine oder mehrere Barrieren (Zaun, Mauer oder dergleichen) schützt/schützen den Bereich vor einem unberechtigten Zutritt.

Die vorliegende Erfindung hat zum Ziel, den mindestens einen Besucher am Tag seines Besuches möglichst wenig mit dem Anmelde- und Abmeldeprozess zu behelligen, so dass er sich voll und ganz auf den eigentlichen Besuch konzentrieren kann. Ein erster Schritt besteht deshalb darin, den Besuch bereits frühzeitig zu planen und Teile des Anmeldeprozesses des Besuchers für das Ereignis zeitlich vorzuverlagern.

Ein Besuch hat üblicherweise einen Anlass. Der Anlass eines Besuchs ist üblicherweise ein Ereignis, das an einem Ereignisort zu einer Ereigniszeit stattfindet und an dem der Besucher teilnehmen möchte, soll, kann oder muss. Ein "Ereignis" kann ein Gespräch, ein Workshop, eine Bewerbung, eine Präsentation, eine Demonstration, die Ausführung einer Dienstleistung, Wartungsarbeiten oder dergleichen sein. Die Ereigniszeit ist eine Zeitspanne und durch eine Ereignisanfangszeit und eine Ereignisendzeit gekennzeichnet.

Der Ereignisort befindet sich innerhalb des geschützten Bereichs oder ist mit diesem identisch.

In einem ersten Schritt wird das Ereignis geplant. Zur Planung des Ereignisses gehört die Festlegung des Ereignisortes, an dem das Ereignis stattfinden soll, die Festlegung mindestens einer Ereignisanfangszeit, zu der das Ereignis beginnen soll und die Festlegung von Teilnehmern, die dem Ereignis beiwohnen sollen. Denkbar ist, dass noch weitere Parameter festgelegt werden, wie beispielsweise eine Ereignisendzeit (Zeit, zu der das Ereignis beendet sein soll), einen Ablaufplan (Agenda), einen Ereignisanlass und/oder dergleichen. Alle Parameter, die das geplante Ereignis spezifizieren, bilden einen Planungsdatensatz.

Zur Planung eines Ereignisses (und zur Erzeugung des Planungsdatensatzes) wird üblicherweise eine Planungseinheit verwendet, die ein Bestandteil des erfindungsgemäßen Systems sein kann. Vorzugsweise gibt es eine Vielzahl an Planungseinheiten. Vorzugsweise verfügt eine Planungseinheit über Mittel, die es erlauben, die Teilnehmer von dem geplanten Ereignis in Kenntnis zu setzen. Ein Computer, auf dem beispielsweise das Computerprogramm Microsoft Outlook oder das Computerprogramm IBM Notes installiert ist, kann eine Planungseinheit im Sinne der vorliegenden Erfindung sein. Solche Computerprogramme ermöglichen das Empfangen und Versenden von E-Mails sowie das Verwalten von Terminen, Kontakten, Aufgaben und Notizen auf dem Computer. Es ist beispielsweise denkbar, dass ein Nutzer das Ereignis plant, indem er einen Termineintrag in einem elektronischen Kalender erzeugt. Er kann den Ereignisort und die Ereigniszeit spezifizieren sowie Teilnehmer benennen. Er kann E-Mail-Adressen der Teilnehmer als Kontaktdaten eingeben, um ihnen eine E-Mail mit den Ereignisdaten (z.B. als Einladung) zukommen zu lassen.

Ein "Computer" ist ein System zur elektronischen Datenverarbeitung, das mittels programmierbarer Rechenvorschriften Daten verarbeitet. Ein Computer umfasst üblicherweise mindestens einen Prozessor (CPU), einen Arbeitsspeicher (RAM) und ein Bussystem zur Übertragung von Daten zwischen den verschiedenen Computerbestandteilen. Zum Computer gehört üblicherweise auch eine Peripherie; als "Peripherie" bezeichnet man alle Geräte, die an den Computer angeschlossen sind, und zur Steuerung des Computers und/oder als Ein- und Ausgabegeräte (zur Eingabe/Ausgabe von Informationen) dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Von der Planungseinheit wird der Planungsdatensatz an die Verwaltungseinheit übermittelt. Die Verwaltungseinheit ist üblicherweise ein Computer, der mittels eines Computerprogramms konfiguriert ist, die hier beschriebenen Funktionen auszuführen. Es ist auch denkbar, dass Planungseinheit und Verwaltungseinheit eine integrierte Einheit bilden. Ferner ist denkbar, dass eine oder mehrere der nachfolgend beschriebenen Funktionen der Verwaltungseinheit durch die Planungseinheit übernommen werden.

Die Übermittlung von Daten/Informationen von einer Einheit zu einer anderen Einheit erfolgt üblicherweise über ein Netzwerk, dem beide Einheiten angehören. Ein Netzwerk (auch Rechnernetz genannt) ist ein Zusammenschluss verschiedener technischer, primär selbstständiger elektronischer Systeme (insbesondere Computer, aber auch Sensoren, Aktoren, Agenten und sonstiger funktechnischer Komponenten usw.), das die Kommunikation der einzelnen Systeme untereinander ermöglicht. Die Kommunikation erfolgt über verschiedene Protokolle, die mit dem ISO/OSI-Modell strukturiert werden können. Beispiele für Netzwerke sind ein lokales Rechnernetz (LAN: Local Area Network) oder das Internet. Die Übermittlung von Daten/Informationen kann über Funk und/oder kabelgebunden erfolgen. Vorzugsweise erfolgt die Übermittlung von Daten/Informationen in verschlüsselter Form.

Wenn in der vorliegenden Beschreibung oder den Patentansprüchen beschrieben ist, dass eine Einheit Daten/Informationen an eine andere Einheit übermittelt, so schließt dies den Fall mit ein, dass die andere Einheit die Daten/Informationen von der einen Einheit abruft.

Die Übermittlung des Planungsdatensatzes von der Planungseinheit an die Verwaltungseinheit kann beispielsweise mittels Versand des Planungsdatensatzes als elektronische Nachricht (E-Mail) erfolgen. Es ist denkbar, dass die Verwaltungseinheit über eine Maschinen-Mailbox (*non-personal mailbox)* verfügt, die automatisiert ausgelesen wird. Die Übermittelung als elektronische Nachricht hat den Vorteil, dass der Nutzer der Planungseinheit eine Kopie der Ereignisdaten an die Verwaltungseinheit übermittelt, wenn er die Ereignisdaten den Teilnehmer per E-Mail zusendet, indem er einfach die E-Mail-Adresse als zusätzliche Empfangsadresse aufnimmt. Diese Lösung hat zudem den Vorteil, dass keine spezifische Schnittstelle zwischen der Planungseinheit und der Verwaltungseinheit definiert und eingerichtet werden muss. Zudem ermöglicht diese Lösung eine Trennung zwischen Planungseinheit und Verwaltungseinheit: als Planungseinheit kann jeder Computer fungieren, auf dem ein Computerprogramm zur Terminplanung installiert ist; die Verwaltungseinheit ist eine spezialisierte Einheit, die üblicherweise nur für die Mitarbeiter der Besucherverwaltung benutzt wird.

Es ist aber auch denkbar, dass auf der Planungseinheit ein Computerprogramm installiert ist (z.B. als Software-Agent oder Add-on- oder Plug-in- oder Standalone-Software), das den Planungsdatensatz automatisiert aus den Ereignisdaten und/oder den Eingaben eines Nutzers extrahiert oder mit dem der Planungsdatensatz erzeugt wird, und das die Planungsdaten über eine definierte und spezifizierte Schnittstelle an die Verwaltungseinheit übermittelt.

Die Verwaltungseinheit kann so konfiguriert sein, dass sie aus dem Planungsdatensatz zumindest die Kontaktdaten des mindestens einen Besuchers, den Ereignisort und die Ereignisanfangszeit extrahiert.

Die Verwaltungseinheit kann so konfiguriert sein, dass sie automatisch erkennt, ob es sich bei einem Teilnehmer um eine Person handelt, für die keine Registrierung zu dem Ereignis erforderlich ist (z.B. um den Gastgeber (Einladenden), einen Kollegen des Gastgebers oder einen anderen "internen" Teilnehmer) oder ob es sich um einen Besucher handelt, für den eine Registrierung erforderlich ist (Betriebsfremder, "externer" Teilnehmer). Die automatische Differenzierung zwischen internen und externen Teilnehmern kann beispielsweise anhand der E-Mail-Adressen erfolgen. Eine E-Mail-Adresse besteht aus zwei Teilen, die durch ein @-Zeichen getrennt sind: einem so genannten lokalen Teil, der vor dem @-Zeichen steht und einem so genannten Domänenteil, der nach dem @-Zeichen steht. Es ist denkbar, dass in einer Datenbank, auf die die Verwaltungseinheit zugreifen kann, die Domänenteile von E-Mail-Adressen gespeichert sind, deren Inhaber als interne Teilnehmer zu klassifizieren sind. Verfügt ein Teilnehmer über eine E-Mail-Adresse, deren Domänenteil nicht in der Datenbank aufgeführt ist, handelt es sich um die E-Mail-Adresse eines Besuchers. Denkbar ist auch, dass die Namen der internen Teilnehmer in einer Datenbank gespeichert sind, auf die die Verwaltungseinheit zugreifen kann. Ist der Name eines Teilnehmers nicht in der Datenbank gespeichert, handelt es sich um den Namen eines Besuchers.

Denkbar ist aber auch, dass die externen Teilnehmer (Besucher) und/oder die internen Teilnehmer durch einen Nutzer identifiziert werden, zum Beispiel durch den Nutzer der Planungseinheit, indem dieser bei der Planung des Ereignisses beispielsweiße durch eine Markierung (Ankreuzen einer virtuellen Box oder dergleichen) für die einzelnen Teilnehmer spezifiziert, ob es sich um einen internen oder einen externen Teilnehmer handelt.

Die Verwaltungseinheit ist so konfiguriert, dass sie den mindestens einen Besucher vorzugsweise auf Basis der extrahierten Kontaktdaten (vorzugsweise auf Basis der E-Mail-Adressen) kontaktiert. Dabei übermittelt die Verwaltungseinheit dem mindestens einen Besucher eine elektronische Nachricht, die dem Besucher den Zugang zu der Registrierungseinheit über ein Netzwerk ermöglicht. Dies kann beispielsweise durch Übermittlung eines Weblinks erfolgen, wobei der Weblink auf ein Webportal verweist, das als Schnittstelle zur Registrierungseinheit fungiert. Denkbar ist auch, dass dem mindestens einen Besucher der Zugang zur Registrierungseinheit über ein Netzwerk durch die Planungseinheit verschafft wird, z.B. indem ein Weblink auf das Webportal, das als Schnittstelle zur Registrierungseinheit fungiert, zusammen mit der Einladung zu dem Ereignis an den Besucher übermittelt wird.

Die Registrierungseinheit ist üblicherweise ein Computer, der mittels eines Computerprogramms konfiguriert ist, die hier beschriebenen Funktionen auszuführen. Es ist auch denkbar, dass Registrierungseinheit und Verwaltungseinheit eine integrierte Einheit bilden. Es ist denkbar, dass die Verwaltungseinheit eine oder mehrere der nachfolgend beschriebenen Funktionen der Registrierungseinheit ausführt.

Über die elektronische Nachricht wird der mindestens eine Besucher aufgefordert, personenbezogene Daten (Identitätsdaten) in eine oder mehrere Eingabemasken des Webportals einzugeben, sofern diese Daten nicht bereits aus dem Planungsdatensatz bekannt sind, um sich für das Ereignis zu registrieren.

Die Registrierungseinheit ist konfiguriert, die Identitätsdaten von dem mindestens einen Besucher entgegenzunehmen (zu empfangen). Bei den Identitätsdaten handelt es sich um ein oder mehrere der folgenden Daten: Vorname, Nachname, Titel, Geschlecht, Geburtsdatum, Geburtsort, Ausweisnummer (z.B. Nummer des Reisepasses oder des Personalausweises). Mit der Eingabe der Identitätsdaten und der Verknüpfung der Identitätsdaten mit den Ereignisdaten wird ein Besucher für ein Ereignis registriert. Verknüpfung bedeutet, dass die Identitätsdaten und die Planungsdaten zusammen als Ereignisdatensatz in einem Datenspeicher gespeichert werden.

Die Eingabe der Identitätsdaten erfolgt üblicherweise mit einer Tatstatur, einer Maus, über einen Touchscreen und/oder ein Mikrofon. Die Eingabe erfolgt üblicherweise an einem Computer, der von dem Besucher genutzt wird. Bei dem Computer kann es sich auch um ein Terminal handeln.

Um die Identitätsdaten eines Besuchers zu sichern, erfolgt die Eingabe und Übertragung der Identitätsdaten vorzugsweise unter Verwendung eines sicheren Hypertext-Übertragungsprotokolls (https, engl. *hypertext transfer protocol secure*)*.* Es ist denkbar, dass der Besucher zunächst eine E-Mail mit einem Link zu einer Webseite erhält. In einem ersten Schritt wird der Besucher gebeten, sich durch die Eingabe seines Namens, seiner E-Mail-Adresse und der Vergabe eines Passworts zu registrieren. Die Registrierungseinheit kann so konfiguriert sein, dass sie dem Besucher in einem nächsten Schritt eine E-Mail mit einem weiteren Link schickt, mit dem der Besucher durch Anklicken den Registrierungsprozess abschließt. Der Besucher kann sich nun auf der Webseite einloggen und die geforderten Identitätsdaten eingeben.

Es ist denkbar, dass die Registrierungseinheit oder die Verwaltungseinheit den durch den Besucher eingegebenen Namen und die durch den Besucher eingegebene E-Mail-Adresse mit den entsprechenden Daten aus dem Planungsdatensatz abgleicht, um zu verhindern, dass sich Besucher zu einem Ereignis registrieren, zu dem sie nicht als Teilnehmer vorgesehen sind.

Vorzugsweise werden die Identitätsdaten und die Planungsdaten zusammen als Ereignisdatensatz in einem Datenspeicher, auf den die Verwaltungseinheit zugreifen kann, gespeichert.

Der Ereignisdatensatz steht ferner der Besucherempfangseinheit zur Verfügung. Es ist denkbar, dass die Besucherempfangseinheit auf den Datenspeicher, auf den die Registrierungseinheit oder die Verwaltungseinheit den Ereignisdatensatz gespeichert hat, zugreifen kann; denkbar ist aber auch, dass der Ereignisdatensatz von der Registrierungseinheit oder der Verwaltungseinheit an die Besucherempfangseinheit übermittelt wird.

Bei der Besucherempfangseinheit handelt es sich üblicherweise um einen Computer, der als Terminal ausgeführt ist oder ein Terminal umfasst. Ein "Terminal" ist ein Endgerät zur Eingabe und Anzeige von Daten. Auch der Begriff "Kiosk" ist für eine solche Besucherempfangseinheit ein geläufiger Begriff.

Die vorzugsweise stationär ausgeführte Besucherempfangseinheit befindet sich in einer Umgebung zum Ereignisort. "Umgebung" bedeutet, dass die Besucherempfangseinheit vorzugsweise so weit vom Ereignisort entfernt ist, dass der Besucher nach dem Aufsuchen der Besucherempfangseinheit und der Erteilung einer Zutrittsfreigabe durch die Besucherempfangseinheit den Ereignisort innerhalb von maximale einer halben Stunde erreichen kann. Vorzugsweise ist die Besucherempfangseinheit weniger als 1 km vom Ereignisort entfernt. In einer bevorzugten Ausführungsform ist die Besucherempfangseinheit weniger als 100 m von einer Zutrittsmöglichkeit zum geschützten Bereich entfernt, noch mehr bevorzugt ist sie weniger als 50 m von einer Zutrittsmöglichkeit zum geschützten Bereich entfernt.

Es ist denkbar, dass das erfindungsgemäße System über mehrere Besucherempfangseinheiten verfügt, die zum Beispiel an verschiedenen Zutrittsmöglichkeiten zu einem oder mehreren geschützten Bereichen stationiert sind.

Die Besucherempfangseinheit ist diejenige Station, die ein Besucher bei seinem Besuch aufsuchen muss, um Zutritt zu einem geschützten Bereich zu erhalten, in dem das Ereignis stattfindet. Die Besucherempfangseinheit führt eine automatisierte Identifizierung und Authentifizierung des Besuchers durch. Ferner prüft sie, ob es sich bei dem Besucher um einen registrierten Besucher handelt. Um diese Funktionen auszuführen, empfängt die Besucherempfangseinheit Daten von dem Besucher. Die Daten dienen der Identifizierung des Besuchers (Identitätsdaten), der Authentifizierung des Besuchers (vorzugsweise mittels biometrischer Merkmale) und der Identifizierung eines Ereignisses, für das der Besucher registriert ist.

Die Besucherempfangseinheit weist eine Ausweisleseeinheit auf, mit der Daten vom Besucher empfangen werden. Derartige Ausweiseleseeinheiten werden unter anderem auch in Check-in-Automaten auf Flughäfen eingesetzt. Der Besucher legt seinen Personalausweis oder Reisepass mit der Seite der personenbezogenen Daten nach unten auf ein Sichtfenster. Eine Kamera oder ein Scanner erzeugt eine digitale Bildaufnahme von der aufgelegten Seite des Ausweises. Eine Texterkennungssoftware (*optical character recognition*) extrahiert den Vor- und den Nachnamen, das Geburtsdatum, den Geburtsort und/oder das Geschlecht. Auf Basis dieser Identitätsdaten "weiß" die Besucherempfangseinheit, wer der Besucher ist (Identifikation).

In einem weiteren Schritt wird geprüft, ob es sich bei dem Besucher tatsächlich um die Person handelt, die der Besucher anhand des Ausweises vorgibt zu sein (Authentifikation). Dazu wird vorzugsweise mit einer ersten Kamera eine erste digitale Bildaufnahme des Fotos in dem Ausweis (Passfoto) erstellt. Eine Bildanalysesoftware extrahiert aus der ersten digitalen Bildaufnahme biometrische Merkmale (erster Biometriedatensatz). Zusätzlich erzeugt eine zweite Kamera eine zweite digitale Bildaufnahme des Gesichts des Besuchers. Auch diese zweite digitale Bildaufnahme wird analysiert und es werden biometrische Merkmale extrahiert (zweiter Biometriedatensatz). Die biometrischen Merkmale der ersten und der zweiten digitalen Bildaufnahme werden verglichen. Liegt die Übereinstimmung oberhalb eines definierten Schwellenwertes, kann mit einer berechenbaren Wahrscheinlichkeit davon ausgegangen werden, dass es sich bei dem Besucher um diejenige Person handelt, die in dem Ausweis spezifiziert ist. Über den Schwellenwert lässt sich die Wahrscheinlichkeit anpassen.

In einem weiteren Schritt erfolgt die Überprüfung, ob der identifizierte Besucher für ein Ereignis registriert ist. Dazu werden die aus dem Ausweis ausgelesenen Daten mit einem oder mehreren Ereignisdatensätzen verglichen. Vorzugsweise erfolgt zunächst oder ausschließlich ein Vergleich mit Ereignisdatensätzen von Ereignissen, die für den aktuellen Tag geplant sind, also für den Tag, an dem der Besucher die Besucherempfangseinheit aufsucht. Findet an dem Tag, an dem der Besucher die Besucherempfangseinheit aufsucht, kein Ereignis statt, zu dem der Besucher registriert ist, so kann die Besucherempfangseinheit eine Mitteilung gegenüber dem Besucher ausgeben, dass dieser für kein Ereignis an dem jeweiligen Tag registriert ist. Es ist auch denkbar, dass der Besucher für ein Ereignis registriert ist, dass dieses Ereignis jedoch abgesagt worden ist, zum Beispiel weil der Einladende erkrankt ist. Die Absage eines Ereignisses kann beispielsweise über die Planungseinheit erfolgen. Der Einladende kann beispielsweise einen Eintrag in einem Kalender zu einem Ereignis löschen oder den Teilnehmer eine elektronische Mitteilung übermitteln, dass das Ereignis nicht stattfindet. In einem solchen Fall kann eine Mitteilung über die Absage des Ereignisses automatisiert an die Besucherempfangseinheit übermittelt werden.

In einem weiteren Schritt wird die Besuchszeit festgestellt. Die Besuchszeit ist diejenige Zeit, zu der der Besucher die Besucherempfangseinheit aufsucht. Es kann sich bei der Besuchszeit zum Beispiel um die Zeit handeln, zu der die Daten vom Besucher durch die Besucherempfangseinheit empfangen werden, oder um die Zeit, zu der die Identität des Besuchers festgestellt worden ist, oder um die Zeit, zu der die Authentizität des Besuchers festgestellt worden ist. Weitere Zeiten sind denkbar.

Die Besuchszeit wird mit der im Ereignisdatensatz für das jeweilige Ereignis gespeicherten Ereignisanfangszeit verglichen und es wird eine Zeitspanne zwischen der Ereignisanfangszeit und der Besuchszeit ermittelt. Dabei sind mehrere Möglichkeiten denkbar:
1. Die Ereignisanfangszeit liegt zeitlich vor der Besuchszeit: der Besucher ist zu spät. Es wird ermittelt, wieviel Zeit bereits zwischen der Ereignisanfangszeit und der Besuchszeit vergangen ist. Ist die Zeitspanne zwischen der Ereignisanfangszeit und der Besuchszeit größer als ein vordefinierter Schwellenwert, wird für den Besucher keine Zutrittsfreigabe erteilt. Ist die Zeitspanne zwischen der Ereignisanfangszeit und der Besuchszeit kleiner als der vordefinierte Schwellenwert oder entspricht diesem, kann für den Besucher noch eine Zutrittsfreigabe erteilt werden. Die Besuchszeit kann auch mit der Ereignisendzeit verglichen werden. Liegt die Besuchszeit nach der Ereignisendzeit, so ist das Ereignis (aller Wahrscheinlichkeit nach) bereits beendet und für den Besucher wird keine Zutrittsfreigabe erteilt. Liegt die Besuchszeit noch vor der Ereignisendzeit, ist das Ereignis (aller Wahrscheinlichkeit nach) noch nicht beendet; für den Besucher kann noch eine Zutrittsfreigabe erteilt werden.
2. Die Ereigniszeit entspricht der Besuchszeit: das Ereignis beginnt gerade. Die Zeitspanne zwischen der Ereignisanfangszeit und der Besuchszeit ist Null. Für den Besucher kann noch eine Zutrittsfreigabe erteilt werden (er muss sich jedoch ggf. beeilen).
3. Die Ereignisanfangszeit liegt zeitlich nach der Besuchszeit: das Ereignis hat noch nicht begonnen. Je nach Größe der Zeitspanne zwischen der Ereignisanfangszeit und der Besuchszeit kann für den Besucher schon eine Zutrittsfreigabe erteilt werden oder eine Zutrittsfreigabe noch verwehrt werden. Liegt die Ereignisanfangszeit weit hinter der Besuchszeit, wird für den Besucher üblicherweise noch keine Zutrittsfreigabe erteilt, um zu verhindern, dass er den geschützten Bereich betritt und dort ungewollte Aktivitäten durchführt. Überschreitet die Zeitspanne zwischen der Ereignisanfangszeit und der Besuchszeit einen vordefinierten Schwellenwert, so wird für den Besucher keine Zutrittsfreigabe erteilt; stattdessen kann ihm zum Beispiel durch eine Mitteilung auf einem Bildschirm der Besucherempfangseinheit signalisiert werden, dass er sich noch gedulden muss und ggf. die Besucherempfangseinheit zu einem späteren Zeitpunkt noch einmal aufsuchen muss. Ist die Zeitspanne zwischen der Ereignisanfangszeit und der Besuchszeit kleiner als der vordefinierte Schwellenwert oder entspricht diesem, kann für den Besucher eine Zutrittsfreigabe erteilt werden.

Wenn die Identität des Besuchers festgestellt ist, die Authentizität des Besuchers bestätigt ist, er für ein Ereignis registriert ist, das nicht abgesagt worden ist, und die Zeitspanne zwischen der Ereignisanfangszeit und der Besuchszeit einen vordefinierten Schwellenwert nicht überschreitet, wird für den Besucher eine Zutrittsfreigabe erteilt. Durch die Zutrittsfreigabe ist der Besucher berechtigt, den geschützten Bereich zu betreten. Diese Zutrittsberechtigung kann dem Besucher gegenüber angezeigt werden, zum Beispiel durch ein grünes Lämpchen, einen Signalton, eine Sprachnachricht und/oder dergleichen. Vorzugsweise gilt die Zutrittsberechtigung für eine definierte Zeitspanne. Ist diese Zeitspanne verstrichen, kann der Besucher den geschützten Bereich nicht mehr betreten. Ferner ist denkbar, dass der Besucher den geschützten Bereich nicht mehr alleine verlassen kann, wenn die Zeitspanne verstrichen ist.

Es ist denkbar, dass auf einem Bildschirm der Besucherempfangseinheit der Ereignisort (ggf. zusammen mit dem Ort der Besucherempfangseinheit) auf einem Lageplan angezeigt wird, so dass der Besucher weiß, wo das Ereignis stattfindet (wo der Ereignisort ist) und wie er dorthin gelangen kann. Es ist denkbar, dass sich der Besucher einen entsprechenden Lageplan ggf. mit einer Routenbeschreibung mit Hilfe eines Druckers als Bestandteil der Besucherempfangseinheit ausdrucken kann.

Es ist denkbar, dass sich die Besucherempfangseinheit unmittelbar an einer Zutrittsmöglichkeit zum geschützten Bereich befindet. Es ist denkbar, dass sich eine Barriere (Tür, Schranke oder dergleichen) zum geschützten Bereich öffnet, sobald der Besucher eine Zutrittsberechtigung erhalten hat.

Vorzugsweise befindet sich die Besucherempfangseinheit jedoch nicht unmittelbar an einer Zutrittsmöglichkeit sondern in einer gewissen Entfernung zu einer Zutrittsmöglichkeit. Der Prozess der Identifizierung, Authentifizierung und Prüfung auf eine vorliegende Registrierung ist zwar infolge der vorliegenden Erfindung vergleichsweise kurz, er nimmt aber dennoch eine gewisse Zeit in Anspruch. Um die Bildung von Menschenschlangen vor einer Zutrittsmöglichkeit zu verhindern, ist die mindestens eine Besucherempfangseinheit in einer bevorzugten Ausführungsform örtlich von der mindesteins einen Zutrittsmöglichkeit zum geschützten Bereich getrennt, d.h. der Abstand zwischen der mindesten einen Besucherempfangseinheit und der mindestens einen Zutrittsmöglichkeit beträgt mindestens 10 Meter, vorzugsweise mindestens 20 Meter. Vorzugsweise befindet sich eine Mehrzahl an Besucherempfangseinheiten in einem ansprechend gestalteten Raum (z.B. einer Empfangshalle), die mit Sitzmöglichkeiten, Getränkeautomaten und/oder dergleichen ausgestattet ist.

Die örtliche Trennung von Besucherempfangseinheit und Zutrittsmöglichkeit kann eine Zutrittskontrolleinheit erforderlich machen, mit der nach der Zutrittsfreigabe durch die Besucherempfangseinheit und vor dem eigentlichen Betreten des geschützten Bereichs noch einmal geprüft wird, ob für die Person, die dabei ist, den geschützten Bereich zu betreten, eine Zutrittsfreigabe vorliegt.

Es ist denkbar, dass der Besucher von der Besucherempfangseinheit im Rahmen der Erteilung einer Zutrittsberechtigung ein Ticket erhält, das ihm den Zugang zum geschützten Bereich ermöglicht. Es ist denkbar, dass das Ticket einen Code umfasst, der gegenüber einer Zutrittskontrolleinheit präsentiert werden muss, um die Zutrittskontrolleinheit passieren zu können. Vorzugsweise berechtigt der Code den Besucher zum Eintritt in den geschützten Bereich (und ggf. auch zum Verlassen des geschützten Bereichs) innerhalb einer definierten Zeitspanne. Ist diese Zeitspanne verstrichen, erhält ein Besucher keinen Zutritt mehr zum geschützten Bereich. Es ist denkbar, dass es sich bei dem Ticket um ein Kärtchen oder ein Stück Papier handelt, auf dem ein optisch lesbarer Code (z.B. ein Strichcode oder ein 2D-Code (Matrixcode)) aufgedruckt ist. Es ist aber auch denkbar, dass es sich bei dem Ticket um eine Chipkarte oder ein Token handelt, bei der/dem der Code in einem elektronischen Speicher abgelegt ist. Ferner ist denkbar, dass das Ticket als Besucherausweis ausgeführt ist, bei dem zum Beispiel der Name des Besuchers, ein Lichtbild des Besuchers, der Ereignistag, die Ereignisanfangszeit, das Ereignisende, der Ereignisort und/oder weitere/andere Angaben in einer Weise vorhanden sind (zum Beispiel in Textform aufgedruckt), die eine Prüfung des Ausweises durch einen Menschen (z.B. Werksdienst) ermöglicht. Es ist denkbar, dass der Besucher das Ticket in Form eines digitalen Bildes (z.B. einer jpeg-, bmp- oder tiff-Datei) z.B. in Form einer SMS oder einer E-Mail auf sein Mobiltelefon übermittelt bekommt.

Die Zutrittskontrolleinheit kann über ein entsprechendes Lesegerät (Strichcode-Scanner, Kamera, Chipkarten-Lesegerät oder dergleichen) verfügen, mit dem der Code ausgelesen und die Berechtigung zum Betreten des geschützten Bereichs (und ggf. zum Verlassen) geprüft wird.

Vorzugsweise ist das erfindungsgemäße System jedoch so ausgebildet, dass kein Ticket erzeugt wird; stattdessen wird dem Besucher lediglich signalisiert, dass er eine Zutrittsberechtigung für den geschützten Bereich hat (z.B. durch eine entsprechende Mitteilung über einen Bildschirm und/oder einen Lautsprecher und/oder eine Signallampe). Die vorliegende Erfindung kommt also vollständig ohne Besucherausweis und Ticket aus und hat damit ökologische und ökonomische Vorteile. In der bevorzugten Ausführungsform erfolgt die nachfolgende Zutrittskontrolle automatisiert. Von der Besucherempfangseinheit wird für jeden Besucher, für den eine Zutrittsfreigabe erteilt worden ist, ein Freigabedatensatz erzeugt, der an die Zutrittskontrolleinheit übermittelt wird. Falls es mehrere Zutrittsmöglichkeiten gibt, durch die ein Besucher den geschützten Bereich betreten kann und darf, erfolgt die Übermittlung des Freigabedatensatzes an alle Zutrittskontrolleinheiten, die den Zutritt an einer Zutrittsmöglichkeit kontrollieren (regeln). Der Freigabedatensatz umfasst biometrische Daten des Besuchers sowie Informationen über eine Zeitspanne, für die eine Freigabe vorliegt. Die biometrischen Daten werden vorzugsweise aus dem zweiten Biometriedatensatz, der durch die Besucherempfangseinheit erzeugt worden ist, erzeugt oder entsprechen diesem. Die Zutrittskontrolleinheit verfügt über eine Bildaufnahmeeinheit (Kamera), mit der automatisiert digitale Bildaufnahmen von Personen, die sich einer Zutrittsmöglichkeit (und damit einer Zutrittskontrolleinheit) nähern, erzeugt werden. Die Zutrittskontrolleinheit ist konfiguriert, die digitalen Bildaufnahmen zu analysieren. Eine Gesichtserkennungssoftware erkennt das Vorliegen von einem oder mehreren Gesichtern in den digitalen Bildaufnahmen. Eine Bildanalysesoftware erzeugt einen dritten Biometriedatensatz von dem mindestens einen Gesicht in einer solchen digitalen Bildaufnahme. Der dritte Biometriedatensatz wird mit den biometrischen Daten der vorliegenden Freigabedatensätze verglichen. Gibt es in den Freigabedatensätzen biometrische Daten, die mit einer definierten Mindestwahrscheinlichkeit mit dem dritten Biometriedatensatz übereinstimmen, dann liegt für die Person, von der die digitale Bildaufnahme des Gesichts erzeugt worden ist, eine Freigabe vor und die sich auf die Zutrittsmöglichkeit zubewegende Person wird durchgelassen. Gibt es in den Freigabedatensätzen keine biometrische Daten, die mit einer definierten Mindestwahrscheinlichkeit mit dem dritten Biometriedatensatz übereinstimmen, dann liegt für die Person, von der die digitale Bildaufnahme des Gesichts erzeugt worden ist, keine Freigabe vor und es werden Maßnahmen ergriffen, um der Person den Zutritt zum geschützten Bereich zu verwehren. Es ist beispielsweise denkbar, den Zutritt durch eine Schranke oder ein Drehkreuz oder eine Tür oder eine andere Vereinzelungsanlage zu kontrollieren. Die Zutrittsmöglichkeit öffnet sich nur für Personen bzw. bleibt nur für Personen geöffnet, für die eine Freigabe vorliegt.

Vorzugsweise ist die mindestens eine Zutrittsmöglichkeit zumindest während einer Zeitspanne, in der mit Besuchern zu rechnen ist (z.B. während einer Besuchszeit, Betriebszeit, Öffnungszeit oder dergleichen), nicht durch eine Barriere verschlossen. Eine barrierefreie Zutrittsmöglichkeit hat eine positive Wirkung auf Besucher; sie vermittelt Offenheit. Stattdessen werden die von der Zutrittskontrolleinheit erzeugten und analysierten digitalen Bildaufnahmen auf einem oder mehreren Monitoren angezeigt, die von einem Wachdienst kontrolliert werden. Dabei kann sich das Wachpersonal in einem Raum befinden, der für die Besucher nicht einsehbar ist, so dass die Besucher von dem Wachpersonal keine Notiz nehmen. Es ist denkbar, dass für Personen, die sich der Zutrittsmöglichkeit nähern, auf dem mindestens einen Monitor angezeigt wird, ob für sie eine Zutrittsfreigabe vorliegt oder nicht. Dies kann beispielsweise mittels einer Markierung wie beispielsweise mit einem Rahmen um das Gesicht des Besuchers in einer oder mehreren digitalen Bildaufnahmen erfolgen. Zum Beispiel können die Gesichter von Personen, für die eine Freigabe vorliegt, grün umrahmt sein, während Gesichter von Personen, für die keine Freigabe vorliegt, rot umrahmt sein können. Nur im Falle einer Person mit einer roten Umrahmung des Gesichts (bzw. einer anderen entsprechenden Markierung) tritt das Wachpersonal in Erscheinung und führt eine weitergehende Prüfung (z.B. der Personalien) der Person durch. Alle Personen mit einer grünen Umrahmung des Gesichts (bzw. einer anderen entsprechenden Markierung) können ungehindert den geschützten Bereich über die Zutrittsmöglichkeit betreten.

Es ist denkbar, dass eine weitere Kamera im Zutrittsbereich vorhanden ist, die eine digitale Bildaufnahme von dem Gesicht einer Person erzeugt, die den geschützten Bereich wieder verlässt/ verlassen will. Eine Bildanalysesoftware ermittelt anhand des abgebildeten Gesichts wiederum biometrische Merkmale (vierter Biometriedatensatz). Mittels Vergleich des vierten Biometriedatensatzes mit dem zweiten und/oder dritten Biometriedatensatz wird der zu der Person zugehörige Freigabedatensatz identifiziert und die Person wird "abgemeldet", d.h. es wird vermerkt, dass die Person den geschützten Bereich wieder verlassen hat.

Die vorliegende Erfindung umfasst das erfindungsgemäße System eine An-/ Abwesenheitsermittlungseinheit. Die An-/Abwesenheitsermittlungseinheit ist konfiguriert, eine Kommunikation mit einem Mobiltelefon eines Besuchers aufzunehmen, um zu prüfen, ob sich der Besucher noch in dem geschützten Bereich aufhält oder den geschützten Bereich bereits verlassen hat. Die An-/Abwesenheitsermittlungseinheit versendet eine so genannte stille SMS (engl. auch *stealth ping, silent SMS* oder *Short Message Type* 0). Mobiltelefone in Reichweite der An-/Abwesenheitsermittlungseinheit versenden daraufhin eine automatische Antwort-SMS, aus der auf die Anwesenheit der Mobiltelefone in Reichweite der An-/Abwesenheitsermittlungseinheit geschlossen werden kann. Durch die Verwendung von mehreren An-/Abwesenheitsermittlungseinheiten und der Einstellung definierter Reichweiten können die An-/Abwesenheitsermittlungseinheiten von Mobiltelefonen im geschützten Bereich ermittelt werden.

Es ist beispielsweise denkbar, eine An-/Abwesenheitsermittlungseinheit an einer Zutrittsmöglichkeit mit einer geringen Reichweite im Bereich von 1 bis 20 Metern zu verwenden. Diese versendet in definierten Zeitabschnitten (z.B. alle 10 Sekunden) stille SMS-Nachrichten. Wenn sich ein Besucher mit einem Mobiltelefon der An-/Abwesenheitsermittlungseinheit nähert, empfängt das Mobiltelefon des Besuchers die stille SMS und sendet eine Antwort-SMS, wobei die Antwort SMS die SIM-Nummer des Mobiltelefons umfasst (SIM (engl.): *subscriber identity module*)*.* Diese SIM-Nummer wird zusammen mit dem Zeitpunkt, zu dem sie ermittelt worden ist, gespeichert. Die An-/Abwesenheitsermittlungseinheit "weiß" nun, welches Mobiltelefon in den geschützten Bereich eingebracht worden ist. Es ist denkbar, die Information zum Mobiltelefon mit Informationen zum Besucher (zum Beispiel mit dem dritten Biometriedatensatz) zu verknüpfen. Beim Verlassen des geschützten Bereichs empfängt das Mobiltelefon erneut eine stille SMS und teilt daraufhin erneut seine SIM-Nummer mit. Die An-/Abwesenheitsermittlungseinheit registriert daraufhin für das Mobiltelefon, dass dieses den geschützten Bereich wieder verlassen haben.

In einer Ausführungsform der vorliegenden Erfindung umfasst das erfindungsgemäße System eine Routenplanungseinheit. Eine solche Routenplanungseinheit kann verwendet werden, um die Routen eines oder mehrerer Besucher von einer Besucherempfangseinheit zu einem Ereignisort zu planen. Es ist beispielsweise denkbar, dass ein Unternehmen über einen zentralen Besucherempfang verfügt, von dem aus Besucher zum Beispiel durch einen Fahrdienst zu einem Ereignisort gebracht werden und ggf. von diesem auch wieder abgeholt und zurück zum Besucherempfang gebracht werden. Da ein Unternehmen üblicherweise eine Vielzahl an Besuchern empfängt, die zu unterschiedlichen Ereignisorten gebracht werden müssen, ist es notwendig, die Fahrten und Routen vorab zu planen, um einen schnellen und reibungslosen Transport der Besucher zu den jeweiligen Ereignisorten zu gewährleisten.

Die Routenplanungseinheit ist üblicherweise ein Computer, der mittels eines Computerprogramms konfiguriert ist, die hier beschriebenen Funktionen auszuführen. Es ist auch denkbar, dass die Routenplanungseinheit und die Verwaltungseinheit eine integrierte Einheit bilden. Ferner ist es denkbar, dass die Verwaltungseinheit eine oder mehrere der nachfolgend beschriebenen Funktionen der Routenplanungseinheit übernimmt.

Die Routenplanungseinheit kann auf die Ereignisdatensätze zugreifen. Es ist denkbar, dass die Ereignisdatensätze von der Registrierungseinheit oder der Verwaltungseinheit an die Routenplanungseinheit übermittelt werden. Denkbar ist auch, dass die Routenplanungseinheit auf eine Datenbank zugreifen kann, in der die Ereignisdatensätze gespeichert sind. Die Ereignisdatensätze umfassen die Informationen, welcher Besucher zu welcher Ereignisanfangszeit (Datum, Uhrezeit) an welchem Ereignisort erscheinen soll. Da die Ereignisdatensätze üblicherweise bereits vor dem Tag des jeweiligen Ereignisses erzeugt werden, liegen diese Informationen vor dem Tag des jeweiligen Ereignisses vor und können damit zur Routenplanung verwendet werden. Vorzugsweise werden aus den Ereignisdatensätzen Routendatensätze erzeugt, die einem Fahrdienst übermittelt werden. Vorzugsweise umfassen die Routendatensätze pseudonymisierte Informationen, das heißt, der Fahrdienst erhält lediglich die Information, dass ein oder mehrere Besucher zu einem definierten Zeitpunkt an einem Besucherempfang abgeholt, zu einem definierten Ereignisort gebracht, und ggf. von dem definierten Ereignisort zu einem definierten Zeitpunkt wieder abgeholt werden sollen. Der Fahrdienst erhält in einem solchen Fall zum Beispiel aus Gründen des Datenschutzes keine personenbezogenen Daten.

Vorzugsweise besitzt jeder Fahrer des Fahrdienstes einen mobilen Computer wie beispielsweise einen Tablet-Computer oder ein Smartphone oder eine Smartwatch oder einen Handheld-Computer oder dergleichen, der/das die genannten Informationen zu den einzelnen Routen anzeigt.

Vorzugsweise ist der mobile Computer eines Fahrers so konfiguriert, dass der Fahrer die Abholung eines oder mehrerer Besucher an einem Besucherempfang und/oder das Absetzen eines oder mehrerer Besucher an einem Ereignisort und/oder das Abholen eines oder mehrerer Besucher von dem Ereignisort und/oder das Absetzen eines oder mehrerer Besucher an dem Besucherempfang bestätigen kann. Bestätigen bedeutet, dass der Fahrer durch eine Eingabe in den mobilen Computer bestätigt, dass er einen Besucher an einem Ort aufgenommen und/oder einen Besucher an einem Ort abgesetzt hat. Vorzugsweise wird der Zeitpunkt einer solchen Bestätigung erfasst und zusammen mit der Bestätigung in einem Datenspeicher gespeichert. Vorzugsweise verfügt der mobile Computer über eine Sendeeinheit, die eine solche Bestätigung zusammen mit dem erfassten Zeitpunkt an die Routenplanungseinheit übermittelt. Die gesammelten Daten können zu Optimierung der zukünftigen Routenplanung genutzt werden, denn sie geben an, wie lange einzelne Routen gedauert haben. Denkbar ist auch, dass der Weg einzelner Fahrzeuge z.B. mittels eines Satellitennavigationssystems (z.B. GPS) verfolgt wird. Auch diese Daten können zur Optimierung der Routenplanung verwendet werden.

Das vorliegende System ist ein autonom geführtes System zum Empfang von Besuchern und zur Kontrolle des Zutritts der Besucher zu einem geschützten Bereich. Die Schritte des erfindungsgemäßen Verfahrens erfolgen automatisiert, d.h. ohne Zutun durch einen Menschen. Die Erfindung ermöglicht eine Besucherverwaltung, die einfach, transparent, schnell, komfortabel und sicher ist.

Die Erfindung wird nachstehend anhand von Figuren näher erläutert, ohne die Erfindung auf die in den Figuren gezeigten Merkmale und Merkmalskombinationen beschränken zu wollen.

Die Bezugszeichen wurden so gewählt, dass sich gleiche Bezugszeichen in verschiedenen Figuren stets auf die gleichen Merkmale (z.B. Komponenten oder Verfahrensschritte) beziehen.

Es zeigen:

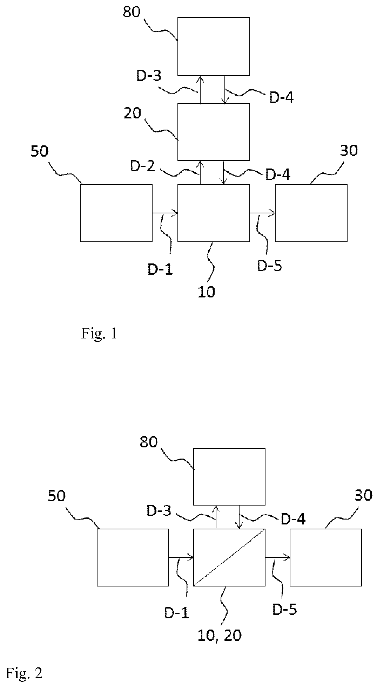

Fig. 1 zeigt schematisch eine bevorzugte Ausführungsform des erfindungsgemäßen Systems. Das System umfasst eine Verwaltungseinheit (10), eine Registrierungseinheit (20), und eine Besucherempfangseinheit (30). In Figur 1 ist ferner eine Planungseinheit (50) dargestellt, die ein optionaler Bestandteil des erfindungsgemäßen Systems ist. In Figur 1 ist ferner ein Computer (80) dargestellt, der von einem Besucher bedient wird. Der Computer (80) ist üblicherweise kein Bestandteil des erfindungsgemäßen Systems. Der Computer (80) kann, insbesondere dann, wenn er als Terminal ausgeführt ist, ein Bestandteil des erfindungsgemäßen Systems sein.

Die Planungseinheit (50) wird verwendet, um ein Ereignis zu planen. Üblicherweise liegt eine Vielzahl an Planungseinheiten vor. Zu der Planung eines Ereignisses zählt mindestens die Festlegung eines Ereignisortes, einer Ereignisanfangszeit und eines externen Teilnehmers (Besuchers). Diese Informationen werden in einem Planungsdatensatz D-1 gespeichert.

Die Planungseinheit (50) übermittelt den Planungsdatensatz (D-1) an die Verwaltungseinheit (10). Die Verwaltungseinheit (10) extrahiert aus dem Planungsdatensatz (D-1) Kontaktdaten (D-2) des mindestens einen Besuchers und übermittelt die Kontaktdaten (D-2) an die Registrierungseinheit (20). Die Registrierungseinheit (20) nutzt die Kontaktdaten (D-2), um dem Besucher über den Computer (80) eine Zugangsmöglichkeit (D-3) zu der Registrierungseinheit (20) zu übermitteln. Der Besucher nutzt den Zugang zur Registrierungseinheit (20) und übermittelt Identitätsdaten (D-4) an die Registrierungseinheit (20). Die Identitätsdaten (D-4) umfassen üblicherweise alle Vor- und den Nachnamen und eine Ausweisnummer des Besuchers. Die Registrierungseinheit (20) übermittelt die Identitätsdaten (D-4) an die Verwaltungseinheit (10). Die Verwaltungseinheit (10) erzeugt aus dem Planungsdatensatz (D-1) und den Identitätsdaten (D-4) einen Ereignisdatensatz (D-5) und übermittelt den Ereignisdatensatz (D-5) an die Besucherempfangseinheit (30).

Fig. 2 zeigt schematisch eine weitere bevorzugte Ausführungsform des erfindungsgemäßen Systems. Das System umfasst eine kombinierte Verwaltungs- und Registrierungseinheit (10, 20), und eine Besucherempfangseinheit (30). In Figur 2 ist ferner eine Planungseinheit (50) dargestellt, die ein optionaler Bestandteil des erfindungsgemäßen Systems ist. In Figur 2 ist ferner ein Computer (80) dargestellt, der von einem Besucher bedient wird und der eher kein Bestandteil des erfindungsgemäßen Systems ist.

Der Planungsdatensatz (D-1) wird von der Planungseinheit (50) an die kombinierte Verwaltungs- und Registrierungseinheit (10, 20) übermittelt. Die kombinierte Verwaltungs- und Registrierungseinheit (10, 20) extrahiert aus dem Planungsdatensatz (D-1) Kontaktdaten des mindestens einen Besuchers und übermittelt dem Besucher über den Computer (80) eine Zugangsmöglichkeit (D-3) zu der kombinierten Verwaltungs- und Registrierungseinheit (10, 20). Der Besucher nutzt den Zugang und übermittelt über den Computer (80) Identitätsdaten (D-4) an die kombinierte Verwaltungs- und Registrierungseinheit (10, 20). Die kombinierte Verwaltungs- und Registrierungseinheit (10, 20) erzeugt aus dem Planungsdatensatz (D-1) und den Identitätsdaten (D-4) einen Ereignisdatensatz (D-5) und übermittelt diesen an die Besucherempfangseinheit (30).

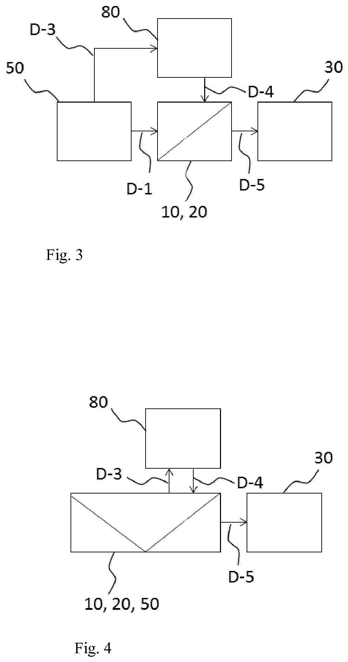

Fig. 3 zeigt schematisch eine weitere bevorzugte Ausführungsform des erfindungsgemäßen Systems. Das System umfasst eine kombinierte Verwaltungs- und Registrierungseinheit (10, 20), und eine Besucherempfangseinheit (30). In Figur 3 ist ferner eine Planungseinheit (50) dargestellt, die ein optionaler Bestandteil des erfindungsgemäßen Systems ist. In Figur 3 ist ferner ein Computer (80) dargestellt, der von einem Besucher bedient wird und der eher kein Bestandteil des erfindungsgemäßen Systems ist.

Die Planungseinheit (50) wird verwendet, um ein Ereignis zu planen. Zu der Planung zählen mindestens die Festlegung eines Ereignisortes, einer Ereignisanfangszeit und eines externen Teilnehmers (Besuchers). Diese Informationen werden in einem Planungsdatensatz (D-1) gespeichert. Die Planungseinheit (50) übermittelt den Planungsdatensatz (D-1) an die kombinierte Verwaltungs- und Registrierungseinheit (10, 20). Ferner übermittelt die Planungseinheit (50) dem mindestens einen Besucher über den Computer (80) eine Zugangsmöglichkeit (D-3) zu der kombinierten Verwaltungs- und Registrierungseinheit (10, 20). Der Besucher nutzt den Zugang und übermittelt Identitätsdaten (D-4) über den Computer (80) an die kombinierte Verwaltungs- und Registrierungseinheit (10, 20). Die kombinierte Verwaltungs- und Registrierungseinheit (10, 20) erzeugt aus dem Planungsdatensatz (D-1) und den Identitätsdaten (D-4) einen Ereignisdatensatz (D-5) und übermittelt diesen an die Besucherempfangseinheit (30).

Fig. 4 zeigt schematisch eine weitere bevorzugte Ausführungsform des erfindungsgemäßen Systems. Das System umfasst eine kombinierte Planungs-, Verwaltungs- und Registrierungseinheit (50, 10, 20), und eine Besucherempfangseinheit (30). In Figur 4 ist ferner ein Computer (80) dargestellt, der von einem Besucher bedient wird und der eher kein Bestandteil des erfindungsgemäßen Systems ist. Die kombinierte Planungs-, Verwaltungs- und Registrierungseinheit (50, 10, 20) wird verwendet, um ein Ereignis zu planen. Zu der Planung zählen mindestens die Festlegung eines Ereignisortes, einer Ereignisanfangszeit und eines externen Teilnehmers (Besuchers). Die kombinierte Planungs-, Verwaltungs- und Registrierungseinheit (50, 10, 20) übermittelt dem mindestens einen Besucher über den Computer (80) eine Zugangsmöglichkeit (D-3) zu der kombinierten Planungs-, Verwaltungs- und Registrierungseinheit (50, 10, 20). Der Besucher nutzt den Zugang und übermittelt Identitätsdaten (D4) über den Computer (80) an die kombinierte Planungs-, Verwaltungs- und Registrierungseinheit (50, 10, 20). Die kombinierte Planungs-, Verwaltungs- und Registrierungseinheit (50, 10, 20) erzeugt aus den Informationen zum Ereignis (Ereignisort, Ereigniszeit, Besucher) und den Identitätsdaten (D-4) einen Ereignisdatensatz (D-5) und übermittelt diesen an die Besucherempfangseinheit (30).

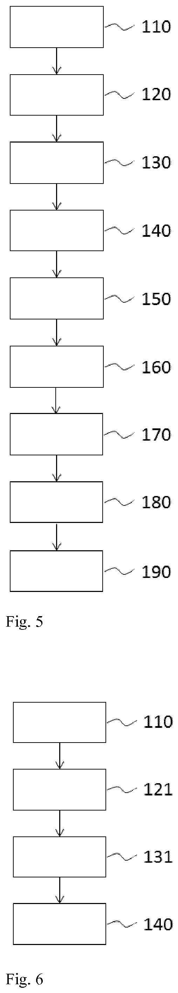

Fig. 5 zeigt eine bevorzugte Ausführungsform des erfindungsgemäßen Verfahrens in einem Ablaufdiagramm.

Das Verfahren umfasst die Schritte:
- Erzeugen eines Planungsdatensatzes, wobei der Planungsdatensatz Informationen zu einem Ereignis und Kontaktdaten eines Besuchers umfassen (110),
- Übermitteln einer elektronischen Mitteilung an den Besucher, wobei die Mitteilung dem Besucher einen Zugang über ein Netzwerk zu einer Registrierungseinheit verschafft (120),
- Empfangen von Identitätsdaten des Besuchers über das Netzwerk durch die Registrierungseinheit (130),
- Erzeugen eines Ereignisdatensatzes auf Basis des Planungsdatensatzes und der vom Besucher übermittelten Identitätsdaten (140),
- Übermitteln des Ereignisdatensatzes an eine Besucherempfangseinheit (150),
- Identifizieren des Besuchers am Tag des Ereignisses (160),
- Authentifizieren des Besuchers am Tag des Ereignisses (170),
- Prüfen, ob der Besucher für das Ereignis registriert ist (180),
- Erteilen einer Zutrittsfreigabe für den Fall, dass der Besucher registriert ist und dass das Ereignis stattfindet (190).

Fig. 6 zeigt eine bevorzugte Ausführungsform der Schritte (110) bis (140) in einem Ablaufdiagramm.

Die Schritte sind:
- Erzeugen eines Planungsdatensatzes, wobei der Planungsdatensatz Informationen zu einem Ereignis und Kontaktdaten eines Besuchers umfassen (110),
- Übermitteln einer elektronischen Mitteilung an den Besucher, wobei die Mitteilung einen Weblink zu einem Webportal umfasst, wobei der Besucher über das Webportal Zugang zu einer Registrierungseinheit erhält (121),
- Empfangen von ersten Identitätsdaten des Besuchers über das Webportal (131),
- Erzeugen eines Ereignisdatensatzes auf Basis des Planungsdatensatzes und der vom Besucher übermittelten ersten Identitätsdaten (140).

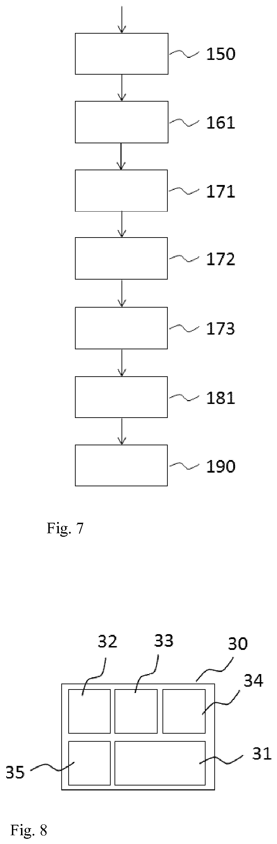

Fig. 7 zeigt eine bevorzugte Ausführungsform der Schritte (150) bis (190) in einem Ablaufdiagramm.

Die Schritte sind:
- Übermitteln des Ereignisdatensatzes an eine Besucherempfangseinheit (150),
- Identifizieren des Besuchers durch Extrahieren von zweiten Identitätsdaten des Besuchers aus einem Ausweis des Besuchers (161),
- Erzeugen einer digitalen Bildaufnahme eines in dem Ausweis des Besuchers befindlichen Lichtbildes und Erzeugen eines ersten Biometriedatensatzes (171),
- Erzeugen einer digitalen Bildaufnahme des Gesichts des Besuchers und Erzeugen eines zweiten Biometriedatensatzes (172),
- Authentifizieren des Besuchers durch Vergleichen des ersten und des zweiten Biometriedatensatzes (173),
- Prüfen, ob der Besucher für ein Ereignis an dem Tag registriert ist durch Vergleichen der zweiten Identitätsdaten mit ersten Identitätsdaten, die in Ereignisdatensätzen enthalten sind (181),
- Erteilen einer Zutrittsfreigabe für den Fall, dass der Besucher registriert ist und dass das Ereignis an dem Tag stattfindet (190).

Fig. 8 zeigt schematisch eine bevorzugte Ausführungsform der Besucherempfangseinheit (30). Die Besucherempfangseinheit (30) umfasst eine Steuer- und Recheneinheit (31), eine Ausweisleseeinheit (32), eine Bildaufnahmeeinheit (33), eine Ein-/Ausgabeeinheit (34) und einen Datenspeicher (35). Mit der Ausweisleseeinheit (32) werden Identitätsdaten aus dem Ausweis eines Besuchers ausgelesen. Mit der Bildaufnahmeeinheit (33) wird eine digitale Bildaufnahme von dem Gesicht des Besuchers erzeugt. Über die Ein-/Ausgabeeinheit (34) kann der Besucher mit der Besucherempfangseinheit (30) kommunizieren. In dem Datenspeicher (35) ist eine Mehrzahl an Ereignisdatensätzen für eine Mehrzahl an Ereignissen gespeichert. Die Steuer- und Recheneinheit (31) dient der Steuerung der genannten Einheiten, der Koordinierung der Datenflüsse zwischen verschiedenen Einheiten, der Erzeugung von Biometriedatensätzen und dem Vergleich von Biometriedatensätzen.

Bei den in den Figuren 1, 2, 3, 4, 12 und 13 dargestellten Besucherempfangseinheiten (30) kann es sich um die in Fig. 8 gezeigte bevorzugte Ausführungsform einer Besucherempfangseinheit handeln.

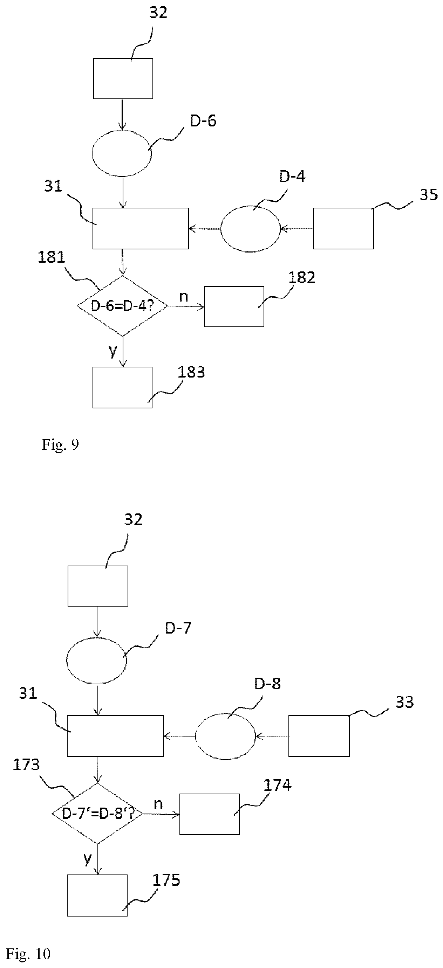

Fig. 9 zeigt schematisch ein Beispiel für die Datenflüsse bei der Identifizierung eines Besuchers am Tag eines Ereignisses und der Prüfung, ob der Besucher für ein Ereignis registriert ist.

Der Besucher wird aufgefordert, seinen Ausweis gegenüber einer Ausweisleseeinheit (32) der Besucherempfangseinheit zu präsentieren. Die Ausweisleseeinheit (32) extrahiert zweite Identitätsdaten (D-6) aus dem Ausweis und übermittelt sie an die Steuer- und Recheneinheit (31) der Besucherempfangseinheit. Damit "weiß" die Besucherempfangseinheit, wer der Besucher ist (bzw. wer er vorgibt zu sein).

In einem Datenspeicher (35) der Besucherempfangseinheit sind Ereignisdatensätze gespeichert. Die Ereignisdatensätze umfassen erste Identitätsdaten (D-4) von registrierten Besuchern.

In einem nächsten Schritt (181) werden die zweiten Identitätsdaten (D-6) mit den ersten Identitätsdaten (D-4) verglichen. Gibt es in den Ereignisdatensätzen erste Identitätsdaten, die mit den zweiten Identitätsdaten übereinstimmen ("y"), so ist der Besucher für das entsprechende Ereignis registriert. Der Besucher ist also identifiziert und seine Registrierung bestätigt (183). Gibt es in den Ereignisdatensätzen keine ersten Identitätsdaten, die mit den zweiten Identitätsdaten übereinstimmen ("n"), ist der Besucher entweder nicht registriert oder das Ereignis findet nicht statt. In einem solchen Fall kann dem Besucher eine entsprechende Mitteilung angezeigt werden (182).

Fig. 10 zeigt schematisch ein Beispiel für die Datenflüsse bei der Authentifizierung eines Besuchers am Tag eines Ereignisses.

Der Besucher wird aufgefordert seinen Ausweis gegenüber einer Ausweisleseeinheit (32) der Besucherempfangseinheit zu präsentieren. Die Ausweisleseeinheit (32) erzeugt eine erste digitale Bildaufnahme (D-7) von dem in dem Ausweis befindlichen Lichtbild des Besuchers und übermittelt sie an die eine Steuer- und Recheneinheit (31) der Besucherempfangseinheit.

Die zur Besucherempfangseinheit zugehörige Bildaufnahmeeinheit (33) erzeugt eine zweite digitale Bildaufnahme (D-8) von dem Gesicht des Besuchers und übermittelt diese ebenfalls an die Steuer- und Recheneinheit (31). Die Steuer- und Recheneinheit (31) vergleicht die Bildaufnahmen miteinander. Dabei werden üblicherweise nicht die Bildaufnahmen direkt miteinander vergleichen, sondern aus den Bildaufnahmen werden zunächst biometrische Daten erzeugt. Aus der ersten digitalen Bildaufnahme (D-7) wird ein erster Biometriedatensatz (D-7') erzeugt. Aus der zweiten digitalen Bildaufnahme (D-8) wird ein zweiter Biometriedatensatz (D-8') erzeugt. Die Biometriedatensätze werden in einem anschließenden Schritt (173) miteinander verglichen (D-7'=D-8'?). Liegt die Übereinstimmung oberhalb eines Schwellenwertes ("y"), so ist der Besucher authentifiziert (175); er ist mit einer definierten Wahrscheinlichkeit derjenige, der er vorgibt zu sein. Liegt die Übereinstimmung nicht oberhalb eines Schwellenwertes ("n"), so konnte der Besucher nicht authentifiziert werden. In einem solchen Fall kann ein Wachpersonal eine weitergehende Prüfung vornehmen (Schritt 174).

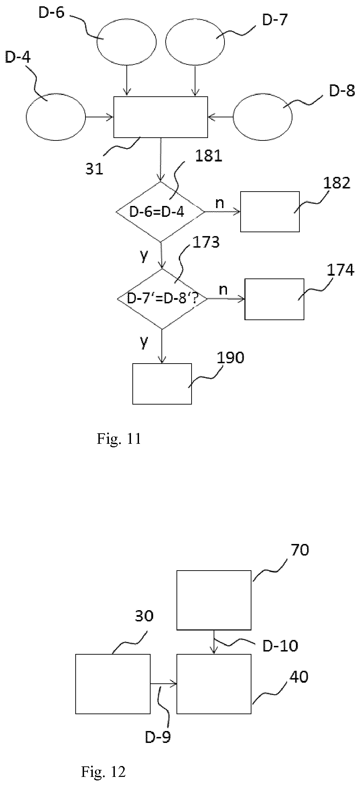

Fig. 11 zeigt schematisch in einem Ablaufdiagramm eine Ausführungsform für die Erteilung einer Zutrittsfreigabe durch die Besucherempfangseinheit. Figur 11 zeigt eine bevorzugte Kombination der in den Figuren 9 und 10 gezeigten Schritte. Es wird zunächst geprüft, ob der Besucher registriert ist (181). Dann wird die Authentizität des Besuchers geprüft (173). Nur dann, wenn der Besucher identifiziert, authentifiziert und registriert ist, wird eine Zutrittsfreigabe erteilt (190).

Fig. 12 zeigt schematisch drei Einheiten des erfindungsgemäßen Systems. Gezeigt werden die Besucherempfangseinheit (30), eine Zutrittskontrolleinheit (40) und eine Bildaufnahmeeinheit (70), die ein Bestandteil der Zutrittskontrolleinheit (40) sein kann. Die in Figur 12 gezeigten Einheiten können mit den in den Figuren 1, 2, 3 und 4 gezeigten Einheiten kombiniert werden. Die Besucherempfangseinheit ist konfiguriert, einen Freigabedatensatz (D-9) an die Zutrittskontrolleinheit (40) zu übermitteln. Der Freigabedatensatz (D-9) umfasst den zweiten Biometriedatensatz (D-8') (siehe Figs. 10, 11). Die Bildaufnahmeeinheit (70) ist konfiguriert, eine digitale Bildaufnahme, auf der das Gesicht eines Besuchers zu erkennen ist, zu erzeugen. Die Bildaufnahmeeinheit (70) ist ferner konfiguriert, die digitale Bildaufnahme (D-10) an die Zutrittskontrolleinheit (40) zu übermitteln. Die Zutrittskontrolleinheit (40) ist konfiguriert, einen dritten Biometriedatensatz (D-10') aus der digitalen Bildaufnahme (D-10) zu erzeugen. Denkbar ist auch, dass die Bildaufnahmeeinheit (70) den dritten Biometriedatensatz (D-10') aus der digitalen Bildaufnahme (D-10) erzeugt und an die Zutrittskontrolleinheit (40) übermittelt.

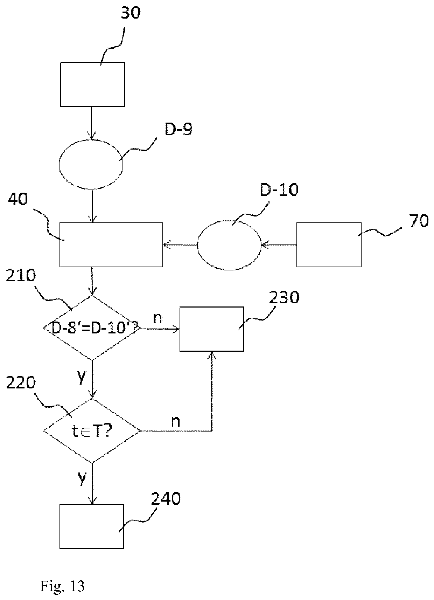

Fig. 13 zeigt schematisch den Datenfluss zwischen den drei in Fig. 12 gezeigten Einheiten des erfindungsgemäßen Systems. Von der Besucherempfangseinheit wird ein Freigabedatensatz (D-9) an die Zutrittskontrolleinheit (40) übermittelt. Der Freigabedatensatz umfasst den zweiten Biometriedatensatz (D-8') sowie eine Information darüber, in welchem Zeitraum der Besucher, von dem der zweite Biometriedatensatz (D-8') stammt, einen geschützten Bereich betreten darf. Nähert sich der Besucher der Bildaufnahmeeinheit (70), so erzeugt diese automatisiert eine oder mehrere digitale Bildaufnahmen (D-10), auf der/denen das Gesicht des Besuchers zu erkennen ist. Die Bildaufnahmeeinheit (70) übermittelt die digitale Bildaufnahme (D-10) an die Zutrittskontrolleinheit (40). Die Zutrittskontrolleinheit (40) erzeugt einen dritten Biometriedatensatz (D-10') aus der digitalen Bildaufnahme (D-10). Denkbar ist auch, dass die Bildaufnahmeeinheit (70) den dritten Biometriedatensatz (D-10') aus der digitalen Bildaufnahme (D-10) erzeugt und an die Zutrittskontrolleinheit (40) übermittelt. Die Zutrittskontrolleinheit (40) vergleicht die Biometriedatensätze (Schritt 210: D-8'=D-10'?). Stimmen sie mit einer definierten Wahrscheinlichkeit überein ("y"), so liegt für den Besucher eine Freigabe vor. In einem nächsten Schritt (220) wird geprüft, ob die Freigabe noch gültig ist; es wird geprüft, ob der aktuelle Zeitpunkt (t) innerhalb der Zeitspanne (T) liegt, für den eine Freigabe erteilt worden ist. Ist die Freigabe noch gültig ("y"), kann der Besucher den geschützten Bereich ungehindert betreten (240). Stimmen die Biometriedatensätze nicht mit einer definierten Wahrscheinlichkeit überein ("n"), oder ist die Freigabe nicht mehr gültig ("n") so wird dem Besucher der Zugang verwehrt (230).

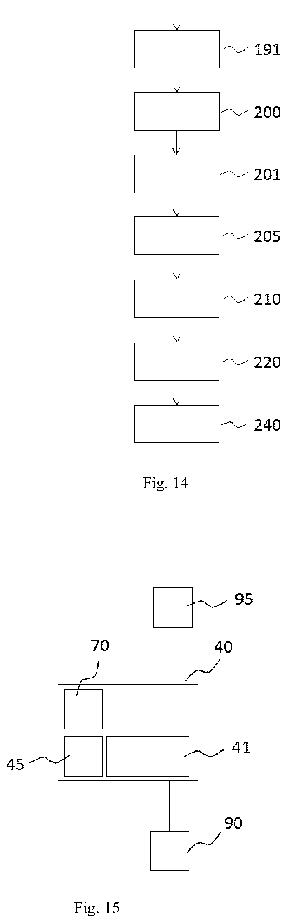

Fig. 14 zeigt schematisch ein Ablaufdiagramm für optionale Schritte des erfindungsgemäßen Verfahrens, die sich an den Schritt "Erteilen einer Zutrittsfreigabe für den Fall, dass der Besucher registriert ist und dass das Ereignis stattfindet (190)" anschließen können.

Die Schritte sind:
- Erzeugen eines Freigabedatensatzes, wobei der Freigabedatensatz Informationen zu dem Zeitraum, in dem der Besucher den geschützten Bereich betreten darf, umfasst, und wobei der Freigabedatensatz den zweiten Biometriedatensatz umfasst (191),
- Übermitteln des Freigabedatensatzes an eine Zutrittskontrolleinheit (200),
- Aufnehmen einer digitalen Bildaufnahme mindestens eines Besuchers, der sich der Zutrittskontrolleinheit nähert (201),
- Erzeugen eines dritten Biometriedatensatzes aus der digitalen Bildaufnahme (205),
- Prüfen, ob für den mindestens einen Besucher eine Freigabe vorliegt durch Vergleichen des dritten Biometriedatensatzes mit dem zweiten Biometriedatensatz (210),
- Prüfen, ob die Freigabe noch gültig ist durch Einordnen der aktuellen Zeit in Bezug auf den Zeitraum, an dem der Besucher den geschützten Bereich betreten darf (220),
- Gewähren eines Zutritts in den geschützten Bereich für den Fall, dass für den mindestens einen Besucher eine gültige Freigabe vorliegt (240).

Fig. 15 zeigt eine bevorzugte Ausführungsform der Zutrittskontrolleinheit (40). Bei den in den Figuren 12, 13 dargestellten Zutrittskontrolleinheiten (40) kann es sich um die in Fig. 15 gezeigte bevorzugte Ausführungsform einer Zutrittskontrolleinheit handeln. Die Zutrittskontrolleinheit (40) umfasst eine Steuer- und Recheneinheit (41), eine Bildaufnahmeeinheit (70) und einen Datenspeicher (45).

Die Zutrittskontrolleinheit (40) ist mit einem Bildschirm (90) verbunden, auf dem digitale Bildaufnahmen, die von der Bildaufnahmeeinheit (70) aufgenommen werden, angezeigt werden. Vorzugsweise nimmt die Bildaufnahmeeinheit (70) kontinuierlich Bildaufnahmen auf, die als Live-Aufnahmen auf dem Bildschirm (90) angezeigt werden. Vorzugsweise beträgt die Aufnahmefrequenz mindestens 1 Bild / Sekunde; vorzugsweise ist die Aufnahmefrequenz größer

Die Bildaufnahmen werden von der Steuer- und Recheneinheit (41) analysiert, ob Gesichter enthalten sind. Werden Gesichter in den Bildaufnahmen erkannt, werden von der Steuer- und Recheneinheit (41) biometrische Merkmale aus den abgebildeten Gesichtern extrahiert und für jedes Gesicht jeweils ein dritter Biometriedatensatz erzeugt. Jeder dritte Biometriedatensatz wird von der Steuer- und Recheneinheit (41) mit zweiten Biometriedatensätzen, die von der Besucherempfangseinheit übermittelt wurden und in dem Datenspeicher (45) gespeichert sind, verglichen. Entspricht ein dritter Biometriedatensatz mit einer definierten Übereinstimmung einem zweiten Biometriedatensatz, liegt für den entsprechenden Besucher eine Freigabe zum Zutritt des geschützten Bereichs vor. In dem Datenspeicher (45) ist für jeden freigegebenen Besucher eine Zeitspanne gespeichert, für die er eine Freigabe hat. Von der Steuer- und Recheneinheit (41) wird geprüft, ob die Zeitspanne noch läuft oder ob diese bereits abgelaufen ist. Besucher, für die eine Freigabe vorliegt, die noch nicht erloschen ist (die noch gültig ist), werden auf dem Bildschirm mit einer Markierung versehen. Besucher, für die keine Freigabe vorliegt, oder für die die Freigabe bereits erloschen ist, werden auf dem Bildschirm mit einer anderen Markierung versehen. Anhand der jeweiligen Markierung kann ein Wachpersonal erkennen, ob ein sich der Zutrittskontrolleinheit nähernder Besucher den geschützten Bereich betreten darf oder nicht betreten darf. Besucher, die den geschützten Bereich betreten dürfen, erhalten freien Zutritt; Besucher, die den geschützten Bereich nicht betreten dürfen, werden an einem Zutritt gehindert. Die Zutrittsmöglichkeit ist vorzugsweise barrierefrei.

Die Zutrittskontrolleinheit (40) ist ferner mit einer An-/Abwesenheitsermittlungseinheit (95) verbunden. Hat ein Besucher den geschützten Bereich betreten, sendet die An-/Abwesenheitsermittlungseinheit (95) eine stille SMS aus, die von einem Mobiltelefon des Besuchers empfangen wird. Von dem Mobiltelefon des Besuchers wird als Antwort auf die stille SMS eine SMS zurückgesandt, die die SIM-Nummer des Mobiltelefons umfasst. Die SIM-Nummer wird an die Zutrittskontrolleinheit (40) übermittelt und in dem Datenspeicher (45) gespeichert. Zusätzlich wird in dem Datenspeicher (45) die Information gespeichert, dass sich ein Besucher mit einem Mobiltelefon, das die SIM-Nummer besitzt, in dem geschützten Bereich aufhält. Vorzugsweise wird auch der Zeitpunkt, an dem der Besucher den geschützten Bereich betreten hat, in dem Datenspeicher (45) gespeichert. Nähert sich der Besucher beim Verlassen erneut der Zutrittskontrolleinheit (40) versendet die An-/Abwesenheitsermittlungseinheit (95) erneut eine stille SMS und das Mobiltelefon des Besuchers antwortet erneut mit einer Nachricht, die die SIM-Nummer des Mobiltelefons umfasst. Die SIM-Nummer wird an die Zutrittskontrolleinheit (40) übermittelt und es wird entweder der Eintrag zu der SIM-Nummer in der Datenbank (45) gelöscht oder es wird in der Datenbank (45) die Information gespeichert, dass der Besucher mit dem Mobiltelefon, das die entsprechende SIM-Nummer hat, den geschützten Bereich wieder verlassen hat.

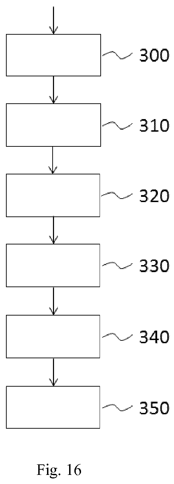

Fig. 16 zeugt schematisch ein Ablaufdiagramm für weitere optionale Schritte des erfindungsgemäßen Verfahrens, die sich an den Schritt "Gewähren eines Zutritts in den geschützten Bereich für den Fall, dass für den mindestens einen Besucher eine gültige Freigabe vorliegt (240)" anschließen können.

Die Schritte sind:
- Versenden einer ersten stillen SMS (300),
- Empfangen einer Antwort auf die erste stille SMS von einem Mobiltelefon, das sich im geschützten Bereich befindet, wobei die Antwort eine SIM-Nummer des Mobiltelefons umfasst (310),
- Speichern der SIM-Nummer in einem Datenspeicher zusammen mit der Information, dass sich ein Besucher mit einem Mobiltelefon mit der entsprechenden SIM-Nummer in dem geschützten Bereich befindet (320),
- Versenden einer zweiten stillen SMS (330),
- Empfangen einer Antwort auf die zweite stille SMS von einem Mobiltelefon, das sich nicht mehr im geschützten Bereich befindet, wobei die Antwort die SIM-Nummer des Mobiltelefons umfasst (340),
- Speichern der SIM-Nummer in einem Datenspeicher zusammen mit der Information, dass sich ein Besucher mit einem Mobiltelefon mit der entsprechenden SIM-Nummer nicht mehr in dem geschützten Bereich befindet, oder Löschen des Eintrags, dass sich ein Besucher mit einem Mobiltelefon mit der entsprechenden SIM-Nummer in dem geschützten Bereich befindet (350).

## Patentansprüche

1. System umfassend
- eine Verwaltungseinheit (10),
- eine Registrierungseinheit (20) und
- eine Besucherempfangseinheit (30),
- eine An-/Abwesenheitsermittlungseinheit (95),
- eine mit der An-/Abwesenheitsermittlungseinheit (95) verbundene Zutrittskontrolleinheit (40),
wobei die Verwaltungseinheit (10) konfiguriert ist, mindestens einem Besucher eines Ereignisses eine elektronische Nachricht zu übermitteln, wobei die elektronische Nachricht dem mindestens einen Besucher einen Zugang zu der Registrierungseinheit (20) über ein Netzwerk ermöglicht, wobei das Ereignis mindestens durch einen Ereignisort und durch eine Ereignisanfangszeit gekennzeichnet ist,
wobei die Registrierungseinheit (20) konfiguriert ist, von dem mindestens einen Besucher über das Netzwerk erste Identitätsdaten (D-4) zu empfangen, und den mindestens einen Besucher für das Ereignis zu registrieren,
wobei die Besucherempfangseinheit (30) in einer Umgebung zum Ereignisort stationiert ist und eine Ausweisleseeinheit (32) und eine Bildaufnahmeeinheit (70) umfasst, wobei die Besucherempfangseinheit (30) konfiguriert ist,
- von dem mindestens einen Besucher Daten zu empfangen, wenn der mindestens eine Besucher zu einer Besuchszeit die Besuchsempfangseinheit aufsucht,
- anhand der empfangenen Daten die Identität des mindestens einen Besuchers festzustellen,
- anhand der empfangenen Daten die Authentizität des mindestens einen Besuchers festzustellen,
- zu prüfen, ob der mindestens eine Besucher für das Ereignis registriert ist,
- eine Zeitspanne (T) zwischen der Ereignisanfangszeit und der Besuchszeit zu ermitteln,
- die Zeitspanne (T) mit einem Schwellenwert zu vergleichen, und
- für den Fall, dass die Zeitspanne (T) den Schwellenwert nicht überschreitet, der mindestens eine Besucher identifiziert ist und authentifiziert ist und der mindestens eine Besucher für das Ereignis registriert ist, für den mindestens einen Besucher eine Zutrittsfreigabe zu erteilen
- die Ausweisleseeinheit (32) zu veranlassen, eine erste digitale Bildaufnahme (D-7) von einem in dem Ausweis befindlichen Lichtbild des mindestens einen Besuchers zu erzeugen,
- die Bildaufnahmeeinheit (33, 70) zu veranlassen, eine zweite digitale Bildaufnahme (D-8) von einem Gesicht des mindestens einen Besuchers zu erzeugen,
- aus der ersten digitalen Bildaufnahme (D-7) einen ersten Biometriedatensatz (D-7') zu erzeugen,
- aus der zweiten digitalen Bildaufnahme (D-8) einen zweiten Biometriedatensatz (D-8') zu erzeugen,
- den ersten und den zweiten Biometriedatensatz (D-8') zu vergleichen, und
- eine Authentizität des mindestens einen Besuchers festzustellen für den Fall, dass der erste Biometriedatensatz (D-7') und der zweite Biometriedatensatz (D-8') mit einer definierten Wahrscheinlichkeit übereinstimmen,
wobei die An-/Abwesenheitsermittlungseinheit (95) konfiguriert ist,
- eine erste stille SMS (300) zu versenden,
- eine Antwort auf die erste stille SMS (300) von einem Mobiltelefon zu empfangen, das sich innerhalb des geschützten Bereichs befindet, wobei die Antwort die SIM-Nummer des Mobiltelefons umfasst,
- die SIM-Nummer an die Zutrittskontrolleinheit (40) zu übermitteln, und
- in einem Datenspeicher (35, 45) die SIM-Nummer und eine Information zu speichern, dass sich ein Besucher mit dem Mobiltelefon in dem geschützten Bereich befindet.

2. System gemäß Anspruch 1, wobei die Verwaltungseinheit (10) konfiguriert ist
- aus einer Kopie einer elektronischen Mitteilung gerichtet an Teilnehmer eines Ereignisses mindestens die folgenden Ereignisinformationen zu extrahieren: Ereignisort, Ereignisanfangszeit, Kontaktdaten (D-2) der Teilnehmer des Ereignisses,
- automatisch zu erkennen, ob es sich bei einem Teilnehmer des Ereignisses um eine Person handelt, für die keine Registrierung zu dem Ereignis erforderlich ist oder ob es sich um mindestens einen Besucher handelt, für den eine Registrierung erforderlich ist,
dem mindestens einen Besucher, eine elektronische Nachricht zu übermitteln, wobei die elektronische Nachricht den Besuchern einen Zugang zu der Registrierungseinheit (20) über ein Netzwerk ermöglicht.

3. System gemäß Anspruch 1 oder 2, wobei die elektronische Nachricht einen Weblink zu einem Webportal umfasst, wobei der mindestens eine Besucher über das Webportal Zugang zu der Registrierungseinheit (20) erhält.

4. System gemäß einem der Ansprüche 1 bis 3,
wobei die Besucherempfangseinheit (30) konfiguriert ist,
- die Ausweisleseeinheit (32) zu veranlassen, zweite Identitätsdaten (D-6) aus einem Ausweis des mindestens einen Besuchers zu extrahieren,
- zu prüfen, ob der mindestens eine Besucher für ein Ereignis registriert ist durch Vergleichen der zweiten Identitätsdaten (D-6) mit den ersten Identitätsdaten (D-4).

5. System gemäß einem der Ansprüche 1 bis 4, wobei die Besucherempfangseinheit (30) konfiguriert ist,
- für einen identifizierten und authentifizierten Besucher einen Freigabedatensatz zu erzeugen, der den zweiten Biometriedatensatz (D-8') umfasst,
- den Freigabedatensatz an die Zutrittskontrolleinheit (40) zu übermitteln,
wobei die Zutrittskontrolleinheit (40) eine Bildaufnahmeeinheit (33, 70) umfasst,
wobei die Zutrittskontrolleinheit (40) konfiguriert ist,
- die Bildaufnahmeeinheit (33, 70) zu veranlassen, eine digitale Bildaufnahme (D-7) von dem mindestens einen Besucher zu erzeugen, der sich der Zutrittskontrolleinheit (40) nähert,
- aus der digitalen Bildaufnahme (D-7) einen dritten Biometriedatensatz (D-10') zu erzeugen,
- den zweiten und den dritten Biometriedatensatz (D-10') zu vergleichen, und
- bei einer definierten Übereinstimmung zwischen dem zweiten und dem dritten Biometriedatensatz (D-10') dem mindestens einen Besucher Zutritt zum geschützten Bereich zu gewähren.

6. System gemäß Anspruch 5,
wobei die Zutrittskontrolleinheit (40) konfiguriert ist,
- die Bildaufnahmeeinheit (70) zu veranlassen, eine digitale Bildaufnahme (D-7) von dem mindestens einen Besucher zu erzeugen, der den geschützten Bereich verlassen will oder verlässt oder verlassen hat,
- aus der digitalen Bildaufnahme (D-7) einen vierten Biometriedatensatz zu erzeugen,
- den vierten und den dritten Biometriedatensatz (D-10') oder den vierten und den zweiten Biometriedatensatz (D-8') zu vergleichen, und
- bei einer definierten Übereinstimmung zwischen den verglichenen Biometriedatensätzen in einem Datenspeicher (35, 45) zu speichern, dass der mindestens eine Besucher den geschützten Bereich verlässt oder verlassen hat.

7. System gemäß einem der Ansprüche 5 oder 6, wobei die Besucherempfangseinheit (30) und die Zutrittskontrolleinheit (40) örtlich voneinander getrennt sind.

8. System gemäß einem der Ansprüche 5, 6 oder 7, wobei der Zutritt zum geschützten Bereich barrierefrei ist.

9. System gemäß einem der Ansprüche 1 bis 8, wobei die An-/Abwesenheitsermittlungseinheit (95) konfiguriert ist,
- eine zweite stille SMS (330) zu versenden,
- eine Antwort auf die zweite stille SMS (330) von einem Mobiltelefon zu empfangen, das sich nicht mehr innerhalb des geschützten Bereichs befindet, wobei die Antwort die SIM-Nummer des Mobiltelefons umfasst,
- die SIM-Nummer an die Zutrittskontrolleinheit (40) zu übermitteln, und
- in einem Datenspeicher (35, 45) eine Information zu speichern, dass sich der Besucher mit dem Mobiltelefon, das die entsprechende SIM-Nummer hat, nicht mehr in dem geschützten Bereich befindet.

10. Verfahren zur Verwaltung des Zutritts mindestens eines Besuchers zu einem geschützten Bereich, wobei das Verfahren die folgenden Schritte umfasst:
- Übermitteln einer elektronischen Mitteilung an mindestens einen Besucher eines Ereignisses, wobei die Mitteilung dem mindestens einen Besucher über ein Netzwerk einen Zugang zu einer Registrierungseinheit (20) verschafft, wobei das Ereignis mindestens durch einen Ereignisort und durch eine Ereignisanfangszeit gekennzeichnet ist, wobei der Ereignisort in dem geschützten Bereich liegt,
- Empfangen von ersten Identitätsdaten (D-4) des mindestens einen Besuchers über das Netzwerk durch die Registrierungseinheit (20),
- Registrieren des mindestens einen Besuchers für das Ereignis durch die Registrierungseinheit (20),
- Erzeugen eines Ereignisdatensatzes (D-5) auf Basis der von dem mindestens einen Besucher übermittelten Identitätsdaten (D-4),
- Übermitteln des Ereignisdatensatzes (D-5) an eine Besucherempfangseinheit (30), wobei die Besucherempfangseinheit (30) in einer Umgebung zum Ereignisort stationiert ist,
- Empfangen von Daten des mindestens einen Besuchers durch die Besucherempfangseinheit (30), wenn der mindestens eine Besucher zu einer Besuchszeit die Besuchsempfangseinheit aufsucht,
- Identifizieren des mindestens einen Besuchers anhand der empfangenen Daten,
- Authentifizieren des mindestens einen Besuchers anhand der empfangenen Daten,
- Prüfen, ob der mindestens eine Besucher für das Ereignis registriert ist (180),
- Ermitteln einer Zeitspanne (T) zwischen der Ereignisanfangszeit und der Besuchszeit,
- Vergleichen der Zeitspanne (T) mit einem Schwellenwert, und
- Erteilen einer Zutrittsfreigabe für den mindestens einen Besucher für den Fall, dass die Zeitspanne (T) den Schwellenwert nicht überschreitet, der mindestens eine Besucher identifiziert und authentifiziert ist und der mindestens eine Besucher für das Ereignis registriert ist,
- Übermitteln des Ereignisdatensatzes (D-5) an eine Besucherempfangseinheit (30),
- Identifizieren des mindestens einen Besuchers durch Extrahieren von zweiten Identitätsdaten (D-6) des mindestens einen Besuchers aus einem Ausweis des mindestens einen Besuchers,
- Erzeugen einer digitalen Bildaufnahme (D-7) eines in dem Ausweis des mindestens einen Besuchers befindlichen Lichtbildes und Erzeugen eines ersten Biometriedatensatzes (D-7'),
- Erzeugen einer digitalen Bildaufnahme (D-7) des Gesichts des mindestens einen Besuchers und Erzeugen eines zweiten Biometriedatensatzes (D-8'),
- Authentifizieren des mindestens einen Besuchers durch Vergleichen des ersten und des zweiten Biometriedatensatzes (D-8'),
- Prüfen, ob der mindestens eine Besucher für ein Ereignis an dem Tag registriert ist durch Vergleichen der zweiten Identitätsdaten (D-6) mit ersten Identitätsdaten (D-4), die in Ereignisdatensätzen enthalten sind,
- Erteilen einer Zutrittsfreigabe für den Fall, dass der mindestens eine Besucher registriert ist und dass das Ereignis an dem Tag stattfindet,
- Versenden (300) einer ersten stillen SMS,
- Empfangen (310) einer Antwort auf die erste stille SMS von einem Mobiltelefon, das sich im geschützten Bereich befindet, wobei die Antwort eine SIM-Nummer des Mobiltelefons umfasst,
- Speichern (320) der SIM-Nummer in einem Datenspeicher zusammen mit der Information, dass sich ein Besucher mit einem Mobiltelefon mit der entsprechenden SIM-Nummer in dem geschützten Bereich befindet.

11. Verfahren gemäß Anspruch 10, umfassend die folgenden Schritte:
- Extrahieren von Ereignisinformationen aus einem Planungsdatensatz (D-1), wobei die Ereignisinformationen Informationen zu einem Ereignis und Kontaktdaten (D-2) des mindestens einen Besuchers umfassen,
- Übermitteln einer elektronischen Mitteilung an den mindestens einen Besucher, wobei die Mitteilung einen Weblink zu einem Webportal umfasst, wobei der mindestens eine Besucher über das Webportal Zugang zu einer Registrierungseinheit (20) erhält,
- Empfangen von ersten Identitätsdaten (D-4) des mindestens einen Besuchers über das Webportal,
- Erzeugen eines Ereignisdatensatzes (D-5) auf Basis des Planungsdatensatzes (D-1) und der vom mindestens einen Besucher übermittelten ersten Identitätsdaten (D-4).

12. Verfahren gemäß Anspruch 10 oder 11, umfassend die folgenden Schritte:
- Erzeugen (191) eines Freigabedatensatzes, wobei der Freigabedatensatz Informationen zu dem Zeitraum, in dem der mindestens eine Besucher den geschützten Bereich betreten darf, umfasst, und wobei der Freigabedatensatz den zweiten Biometriedatensatz (D-8') umfasst,
- Übermitteln (200) des Freigabedatensatzes an eine Zutrittskontrolleinheit (40),
- Aufnehmen (201) einer digitalen Bildaufnahme (D-7) des mindestens einen Besuchers, der sich der Zutrittskontrolleinheit (40) nähert,
- Erzeugen (205) eines dritten Biometriedatensatzes (D-10') aus der digitalen Bildaufnahme (D-7),
- Prüfen (210), ob für den mindestens einen Besucher eine Freigabe vorliegt durch Vergleichen des dritten Biometriedatensatzes (D-10') mit dem zweiten Biometriedatensatz (D-8'),
- Prüfen (220), ob die Freigabe noch gültig ist durch Einordnen der aktuellen Zeit in Bezug auf den Zeitraum, an dem der mindestens eine Besucher den geschützten Bereich betreten darf,
- Gewähren (240) eines Zutritts in den geschützten Bereich für den Fall, dass für den mindestens einen Besucher eine gültige Freigabe vorliegt.

13. Verfahren gemäß einem der Ansprüche 10, 11 oder 12, umfassend die folgenden Schritte:
- Erzeugen einer digitalen Bildaufnahme (D-7) des mindestens einen Besuchers, der den geschützten Bereich verlassen will oder verlässt oder verlassen hat,
- Erzeugen eines vierten Biometriedatensatzes aus der digitalen Bildaufnahme (D-7),
- Vergleichen des vierten und des dritten Biometriedatensatzes (D-10') oder des vierten und des zweiten Biometriedatensatzes (D-8'), und
- bei einer definierten Übereinstimmung zwischen den verglichenen Biometriedatensätzen Speichern in einem Datenspeicher (35, 45), dass der mindestens eine Besucher den geschützten Bereich verlässt oder verlassen hat.

14. Verfahren gemäß einem der Ansprüche 10, 11, 12 oder 13, umfassend die folgenden Schritte:
- Versenden (330) einer zweiten stillen SMS,
- Empfangen (340) einer Antwort auf die zweite stille SMS von einem Mobiltelefon, das sich nicht mehr im geschützten Bereich befindet, wobei die Antwort die SIM-Nummer des Mobiltelefons umfasst,
- Speichern (350) der SIM-Nummer in einem Datenspeicher (35, 45) zusammen mit der Information, dass sich ein Besucher mit einem Mobiltelefon mit der entsprechenden SIM-Nummer nicht mehr in dem geschützten Bereich befindet, oder Löschen des Eintrags, dass sich ein Besucher mit einem Mobiltelefon mit der entsprechenden SIM-Nummer in dem geschützten Bereich befindet.

15. Computerprogrammprodukt umfassend einen Programmcode, der auf einem Datenträger gespeichert ist, und der ein System umfassend eine Verwaltungseinheit (10), eine Registrierungseinheit (20) und eine Besucherempfangseinheit (30) dazu veranlasst, die folgenden Schritte auszuführen, wenn der Programmcode in den Arbeitsspeichern der genannten Einheiten geladen ist,
- Übermitteln einer elektronischen Mitteilung an mindestens einen Besucher eines Ereignisses, wobei die Mitteilung dem mindestens einen Besucher über ein Netzwerk einen Zugang zu einer Registrierungseinheit (20) verschafft, wobei das Ereignis mindestens durch einen Ereignisort und durch eine Ereignisanfangszeit gekennzeichnet ist,
- Empfangen von Identitätsdaten (D-4) des mindestens einen Besuchers über das Netzwerk durch die Registrierungseinheit (20),
- Erzeugen eines Ereignisdatensatzes (D-5) auf Basis der von dem mindestens einen Besucher übermittelten Identitätsdaten (D-4),
- Übermitteln des Ereignisdatensatzes (D-5) an die Besucherempfangseinheit (30),
- Empfangen von Daten des mindestens einen Besuchers durch die Besucherempfangseinheit (30), wenn der mindestens eine Besucher zu einer Besuchszeit die Besuchsempfangseinheit aufsucht,
- Identifizieren des mindestens einen Besuchers anhand der empfangenen Daten,
- Authentifizieren des mindestens einen Besuchers anhand der empfangenen Daten,
- Prüfen, ob der mindestens eine Besucher für das Ereignis registriert ist,
- Ermitteln einer Zeitspanne (T) zwischen der Ereignisanfangszeit und der Besuchszeit,
- Vergleichen der Zeitspanne (T) mit einem Schwellenwert, und
- Erteilen einer Zutrittsfreigabe für den mindestens einen Besucher für den Fall, dass die Zeitspanne (T) den Schwellenwert nicht überschreitet, der mindestens eine Besucher identifiziert und authentifiziert ist und der mindestens eine Besucher für das Ereignis registriert ist,
wobei das Computerprogrammprodukt, wenn es in den Arbeitsspeicher eines oder mehrerer Computer (80) gespeichert ist, den einen oder die mehreren Computer (80) veranlasst, das Verfahren gemäß einem der Ansprüche 10 bis 14 auszuführen.

## Claims

1. System comprising
- a management unit (10),
- a registration unit (20) and
- a visitor reception unit (30),
- a presence/absence detection unit (95),
- an entry control unit (40) connected to the presence/absence detection unit (95),
the management unit (10) being configured to transmit an electronic message to at least one visitor to an event, the electronic message enabling the at least one visitor to access the registration unit (20) via a network, the event being characterized at least by an event location and by an event start time,
the registration unit (20) being configured to receive first identity data (D-4) from the at least one visitor via the network and to register the at least one visitor for the event,
the visitor reception unit (30) being stationed in the vicinity of the event location and comprising an ID card reader unit (32) and an image capture unit (70), the visitor reception unit (30) being configured
- to receive data from the at least one visitor if the at least one visitor goes to the visitor reception unit during a visit time,
- to use the received data to establish the identity of the at least one visitor,
- to use the received data to establish the authenticity of the at least one visitor,
- to check whether the at least one visitor is registered for the event,
- to determine a length of time (T) between the event start time and the visit time,
- to compare the length of time (T) with a threshold value, and
- if the length of time (T) does not exceed the threshold value, the at least one visitor is identified and authenticated and the at least one visitor is registered for the event, to give the at least one visitor clearance for entry,
- to cause the ID card reader unit (32) to produce a first digital image (D-7) of a photograph of the at least one visitor that the ID card contains,
- to cause the image capture unit (33, 70) to produce a second digital image (D-8) of a face of the at least one visitor,
- to generate a first biometric data set (D-7') from the first digital image (D-7),
- to generate a second biometric data set (D-8') from the second digital image (D-8),
- to compare the first and the second biometric data set (D-8'), and
- to establish an authenticity of the at least one visitor if the first biometric data set (D-7') and the second biometric data set (D-8') match with a defined probability,
the presence/absence detection unit (95) being configured
- to send a first silent SMS (300),
- to receive a reply to the first silent SMS (300) from a mobile phone that is within the protected area, the reply including the SIM number of the mobile phone,
- to transmit the SIM number to the entry control unit (40), and
- to use a data memory (35, 45) to store the SIM number and information that a visitor with the mobile phone is in the protected area.

2. System according to Claim 1, the management unit (10) being configured
- to extract at least the following event information from a copy of an electronic communication sent to participants in an event: event location, event start time, contact details (D-2) of the participants in the event,
- to automatically detect whether a participant in the event is a person who is not required to register for the event or whether they are at least one visitor who is required to register,
to transmit an electronic message to the at least one visitor, the electronic message enabling the visitors to access the registration unit (20) via a network.

3. System according to Claim 1 or 2, the electronic message including a web link to a web portal, the at least one visitor being given access to the registration unit (20) via the web portal.

4. System according to one of Claims 1 to 3,
the visitor reception unit (30) being configured
- to cause the ID card reader unit (32) to extract second identity data (D-6) from an ID card of the at least one visitor,
- to check whether the at least one visitor is registered for an event by comparing the second identity data (D-6) with the first identity data (D-4).

5. System according to one of Claims 1 to 4, the visitor reception unit (30) being configured
- to generate, for an identified and authenticated visitor, a clearance data set that includes the second biometric data set (D-8'),
- to transmit the clearance data set to the entry control unit (40),
the entry control unit (40) comprising an image capture unit (33, 70),
the entry control unit (40) being configured
- to cause the image capture unit (33, 70) to produce a digital image (D-7) of the at least one visitor who is approaching the entry control unit (40),
- to generate a third biometric data set (D-10') from the digital image (D-7),
- to compare the second and the third biometric data set (D-10'), and
- if there is a defined match between the second and the third biometric data set (D-10'), to allow the at least one visitor to enter the protected area.

6. System according to Claim 5,
the entry control unit (40) being configured
- to cause the image capture unit (70) to produce a digital image (D-7) of the at least one visitor who wishes to leave or is leaving or has left the protected area,
- to generate a fourth biometric data set from the digital image (D-7),
- to compare the fourth and the third biometric data set (D-10') or the fourth and the second biometric data set (D-8'), and
- if there is a defined match between the compared biometric data sets, to use a data memory (35, 45) to store that the at least one visitor is leaving or has left the protected area.

7. System according to either of Claims 5 and 6, the visitor reception unit (30) and the entry control unit (40) being physically separated from one another.

8. System according to one of Claims 5, 6 and 7, the entry to the protected area being barrier-free.

9. System according to one of Claims 1 to 8, the presence/absence detection unit (95) being configured
- to send a second silent SMS (330),
- to receive a reply to the second silent SMS (330) from a mobile phone that is no longer within the protected area, the reply including the SIM number of the mobile phone,
- to transmit the SIM number to the entry control unit (40), and
- to use a data memory (35, 45) to store information that the visitor with the mobile phone that has the corresponding SIM number is no longer in the protected area.

10. Method for managing the entry of at least one visitor to a protected area, the method comprising the following steps:
- transmitting an electronic communication to at least one visitor to an event, the communication providing the at least one visitor with access to a registration unit (20) via a network, the event being characterized at least by an event location and by an event start time, the event location being situated in the protected area,
- the registration unit (20) receiving first identity data (D-4) of the at least one visitor via the network,
- the registration unit (20) registering the at least one visitor for the event,
- generating an event data set (D-5) based on the identity data (D-4) transmitted by the at least one visitor,
- transmitting the event data set (D-5) to a visitor reception unit (30), the visitor reception unit (30) being stationed in the vicinity of the event location,
- the visitor reception unit (30) receiving data of the at least one visitor if the at least one visitor goes to the visitor reception unit during a visit time,
- identifying the at least one visitor on the basis of the received data,
- authenticating the at least one visitor on the basis of the received data,
- checking whether the at least one visitor is registered for the event (180),
- determining a length of time (T) between the event start time and the visit time,
- comparing the length of time (T) with a threshold value, and
- giving the at least one visitor clearance for entry if the length of time (T) does not exceed the threshold value, the at least one visitor is identified and authenticated and the at least one visitor is registered for the event,
- transmitting the event data set (D-5) to a visitor reception unit (30),
- identifying the at least one visitor by extracting second identity data (D-6) of the at least one visitor from an ID card of the at least one visitor,
- producing a digital image (D-7) of a photograph that the ID card of the at least one visitor contains and generating a first biometric data set (D-7'),
- producing a digital image (D-7) of the face of the at least one visitor and generating a second biometric data set (D-8'),
- authenticating the at least one visitor by comparing the first and the second biometric data set (D-8'),
- checking whether the at least one visitor is registered for an event on the day by comparing the second identity data (D-6) with first identity data (D-4) that event data sets contain,
- giving clearance for entry if the at least one visitor is registered and the event is taking place on that day,
- sending (300) a first silent SMS,
- receiving (310) a reply to the first silent SMS from a mobile phone that is in the protected area, the reply including a SIM number of the mobile phone,
- storing (320) the SIM number in a data memory together with the information that a visitor with a mobile phone having the corresponding SIM number is in the protected area.

11. Method according to Claim 10, comprising the following steps:
- extracting event information from a planning data set (D-1), the event information including information about an event and contact details (D-2) of the at least one visitor,
- transmitting an electronic communication to the at least one visitor, the communication including a web link to a web portal, the at least one visitor being given access to a registration unit (20) via the web portal,
- receiving first identity data (D-4) of the at least one visitor via the web portal,
- generating an event data set (D-5) based on the planning data set (D-1) and the first identity data (D-4) transmitted by the at least one visitor.

12. Method according to Claim 10 or 11, comprising the following steps:
- generating (191) a clearance data set, the clearance data set including information about the period during which the at least one visitor is permitted to enter the protected area, and the clearance data set including the second biometric data set (D-8'),
- transmitting (200) the clearance data set to an entry control unit (40),
- capturing (201) a digital image (D-7) of the at least one visitor who is approaching the entry control unit (40),
- generating (205) a third biometric data set (D-10') from the digital image (D-7),
- checking (210) whether the at least one visitor has clearance by comparing the third biometric data set (D-10') with the second biometric data set (D-8'),
- checking (220) whether the clearance is still valid by classifying the current time relative to the period during which the at least one visitor is permitted to enter the protected area,
- allowing (240) entry to the protected area if the at least one visitor has valid clearance.

13. Method according to one of Claims 10, 11 and 12, comprising the following steps:
- producing a digital image (D-7) of the at least one visitor who wishes to leave or is leaving or has left the protected area,
- generating a fourth biometric data set from the digital image (D-7),
- comparing the fourth and the third biometric data set (D-10') or the fourth and the second biometric data set (D-8'), and
- if there is a defined match between the compared biometric data sets, using a data memory (35, 45) to store that the at least one visitor is leaving or has left the protected area.

14. Method according to one of Claims 10, 11, 12 and 13, comprising the following steps:
- sending (330) a second silent SMS,
- receiving (340) a reply to the second silent SMS from a mobile phone that is no longer in the protected area, the reply including the SIM number of the mobile phone,
- storing (350) the SIM number in a data memory (35, 45) together with the information that a visitor with a mobile phone having the corresponding SIM number is no longer in the protected area, or erasing the entry that a visitor with a mobile phone having the corresponding SIM number is in the protected area.

15. Computer program product comprising a program code that is stored on a data medium and causes a system comprising a management unit (10), a registration unit (20) and a visitor reception unit (30) to carry out the following steps when the program code is loaded in the main memories of said units,
- transmitting an electronic communication to at least one visitor to an event, the communication providing the at least one visitor with access to a registration unit (20) via a network, the event being characterized at least by an event location and by an event start time,
- the registration unit (20) receiving identity data (D-4) of the at least one visitor via the network,
- generating an event data set (D-5) based on the identity data (D-4) transmitted by the at least one visitor,
- transmitting the event data set (D-5) to the visitor reception unit (30),
- the visitor reception unit (30) receiving data of the at least one visitor if the at least one visitor goes to the visitor reception unit during a visit time,
- identifying the at least one visitor on the basis of the received data,
- authenticating the at least one visitor on the basis of the received data,
- checking whether the at least one visitor is registered for the event,
- determining a length of time (T) between the event start time and the visit time,
- comparing the length of time (T) with a threshold value, and
- giving the at least one visitor clearance for entry if the length of time (T) does not exceed the threshold value, the at least one visitor is identified and authenticated and the at least one visitor is registered for the event,
the computer program product, when stored in the main memory of one or more computers (80), causing the one or more computers (80) to carry out the method according to one of Claims 10 to 14.

## Revendications

1. Système comprenant
- une unité de gestion (10),
- une unité d'inscription (20) et
- une unité d'accueil de visiteurs (30),
- une unité de détermination de présence/d'absence (95),
- une unité de contrôle d'accès (40) reliée à l'unité de détermination de présence/d'absence (95),
l'unité de gestion (10) étant configurée pour transmettre un message électronique à au moins un visiteur d'un événement, le message électronique permettant à au moins un visiteur d'accéder à l'unité d'inscription (20) par un réseau, l'événement étant caractérisé au moins par un emplacement de l'événement et par une heure de début d'événement,
l'unité d'inscription (20) étant configurée pour recevoir des premières données d'identité (D-4) provenant de l'au moins un visiteur par le réseau et pour inscrire l'au moins un visiteur à l'événement,
l'unité d'accueil de visiteurs (30) étant positionnée dans un environnement par rapport à l'emplacement de l'événement et comprenant une unité de lecture de cartes d'identité (32) et une unité d'enregistrement d'images (70), l'unité d'accueil de visiteurs (30) étant configurée
- recevoir des données de l'au moins un visiteur lorsque l'au moins un visiteur visite l'unité d'accueil de visite à une heure de visite,
- établir l'identité de l'au moins un visiteur à l'aide des données reçues,
- établir l'authenticité de l'au moins un visiteur à l'aide des données reçues,
- vérifier si l'au moins un visiteur est inscrit à l'événement,
- déterminer un laps de temps (T) entre l'heure de début de l'événement et l'heure de visite,
- comparer le laps de temps (T) à une valeur de seuil, et
- dans le cas où le laps de temps (T) ne dépasse pas la valeur de seuil, l'au moins un visiteur est identifié et est authentifié, et l'au moins un visiteur est inscrit à l'événement, pour accorder l'autorisation d'accès à l'au moins un visiteur
- amener l'unité de lecture de cartes d'identité (32) à générer un premier enregistrement d'images numériques (D-7) d'une image de l'au moins un visiteur figurant sur la carte d'identité,
- amener l'unité d'enregistrement d'images (33, 70) à générer un deuxième enregistrement d'images numériques (D-8) d'un visage de l'au moins un visiteur,
- générer un premier jeu de données biométriques (D-7') à partir du premier enregistrement d'images numériques (D-7),
- générer un deuxième jeu de données biométriques (D-8') à partir du deuxième enregistrement d'images numériques (D-8),
- comparer le premier et le deuxième jeu de données biométriques (D-8'), et
- établir l'authenticité de l'au moins un visiteur dans le cas où le premier jeu de données biométriques (D-7') et le deuxième jeu de données biométriques (D-8') concordent avec une probabilité définie,
l'unité de détermination de présence/d'absence (95) étant configurée pour
- envoyer un premier SMS silencieux (300),
- recevoir une réponse au premier SMS silencieux (300) d'un téléphone mobile qui se trouve à l'intérieur de la zone protégée, la réponse comprenant le numéro SIM du téléphone mobile,
- transmettre le numéro SIM à l'unité de contrôle d'accès (40), et
- stocker dans une mémoire de données (35, 45) le numéro SIM et les informations qu'un visiteur avec le téléphone mobile se trouve dans la zone protégée.

2. Système selon la revendication 1, l'unité de gestion (10) étant configurée pour
- extraire d'une copie d'un message électronique adressé à des participants à un événement au moins les informations suivantes : emplacement de l'événement, heure de début de l'événement, coordonnées (D-2) des participants à l'événement,
- détecter automatiquement si un participant à l'événement est une personne pour laquelle aucune inscription à l'événement n'est requise ou s'il est au moins un visiteur pour lequel une inscription est requise,
transmettre un message électronique à l'au moins un visiteur, le message électronique permettant aux visiteurs d'accéder à l'unité d'inscription (20) par un réseau.

3. Système selon la revendication 1 ou 2, le message électronique comprenant un lien Web vers un portail Web, l'au moins un visiteur obtenant l'accès à l'unité d'inscription (20) par le portail Web.

4. Système selon l'une des revendications 1 à 3, l'unité d'accueil de visiteurs (30) étant configurée pour
- amener l'unité de lecture de cartes d'identité (32) à extraire des deuxièmes données d'identité (D-6) d'une carte d'identité de l'au moins un visiteur,
- vérifier si l'au moins un visiteur est inscrit à un événement en comparant les deuxièmes données d'identité (D-6) aux premières données d'identité (D-4).

5. Système selon l'une des revendications 1 à 4, l'unité d'accueil de visiteurs (30) étant configurée pour
- générer, pour un visiteur identifié et authentifié, un jeu de données de validation, qui comprend le deuxième jeu de données biométriques (D-8'),
- transmettre le jeu de données de validation à l'unité de contrôle d'accès (40),
l'unité de contrôle d'accès (40) comprenant une unité d'enregistrement d'images (33, 70),
l'unité de contrôle d'accès (40) étant configurée pour
- amener l'unité d'enregistrement d'images (33, 70) à générer un enregistrement d'images numériques (D-7) de l'au moins un visiteur, qui approche de l'unité de contrôle d'accès (40),
- générer un troisième jeu de données biométriques (D-10') à partir de l'enregistrement d'images numériques (D-7),
- comparer les deuxième et troisième jeux de données biométriques (D-10'), et
- accorder l'accès à la zone protégée à l'au moins un visiteur en cas de concordance définie entre les deuxième et troisième jeux de données biométriques (D-10').

6. Système selon la revendication 5,
l'unité de contrôle d'accès (40) étant configurée pour
- amener l'unité d'enregistrement d'images (70) à générer un enregistrement d'images numériques (D-7) de l'au moins un visiteur qui souhaite quitter ou qui quitte ou qui a quitté la zone protégée,
- générer un quatrième jeu de données biométriques à partir de l'enregistrement d'images numériques (D-7),
- comparer les quatrième et troisième jeux de données biométriques (D-10') ou les quatrième et deuxième jeux de données biométriques (D-8'), et
- stocker dans une mémoire de données (35, 45) que l'au moins un visiteur quitte ou a quitté la zone protégée en cas de concordance définie entre les jeux de données biométriques comparés.

7. Système selon l'une des revendications 5 et 6, l'unité d'accueil de visiteurs (30) et l'unité de contrôle d'accès (40) étant séparées spatialement l'une de l'autre.

8. Système selon l'une des revendications 5, 6 et 7, l'accès à la zone protégée étant sans obstacle.

9. Système selon l'une des revendications 1 à 8, l'unité de détermination de présence/d'absence (95) étant configurée pour
- envoyer un deuxième SMS silencieux (330),
- recevoir une réponse au deuxième SMS silencieux (330) d'un téléphone mobile qui ne se trouve plus à l'intérieur de la zone protégée, la réponse comprenant le numéro SIM du téléphone mobile,
- transmettre le numéro SIM à l'unité de contrôle d'accès (40), et
- stocker dans une mémoire de données (35, 45) des informations indiquant que le visiteur ne se trouve plus dans la zone protégée avec le téléphone mobile qui possède le numéro SIM correspondant.

10. Procédé de gestion de l'accès d'au moins un visiteur à une zone protégée, le procédé comprenant les étapes suivantes :
- transmission d'un message électronique à au moins un visiteur d'un événement, le message donnant à l'au moins un visiteur l'accès à une unité d'inscription (20) par un réseau, l'événement étant caractérisé au moins par un emplacement d'événement et par une heure de début d'événement, l'emplacement d'événement étant situé dans la zone protégée,
- réception par l'unité d'inscription (20) de premières données d'identité (D-4) de l'au moins un visiteur par le réseau,
- inscription de l'au moins un visiteur à l'événement par l'unité d'inscription (20),
- génération d'un jeu de données d'événement (D-5) sur la base des données d'identité (D-4) transmises par l'au moins un visiteur,
- transmission du jeu de données d'événement (D-5) à une unité d'accueil de visiteurs (30), l'unité d'accueil de visiteurs (30) étant positionnée dans un environnement par rapport à l'emplacement de l'événement,
- réception de données de l'au moins un visiteur par l'unité d'accueil de visiteurs (30) lorsque l'au moins un visiteur visite l'unité d'accueil de visites à une heure de visite,
- identification de l'au moins un visiteur à l'aide des données reçues,
- authentification de l'au moins un visiteur à l'aide des données reçues,
- vérification si l'au moins un visiteur est inscrit (180) à l'événement,
- détermination d'un laps de temps (T) entre l'heure de début de l'événement et l'heure de visite,
- comparaison du laps de temps (T) à une valeur de seuil, et
- accord d'une autorisation d'accès à l'au moins un visiteur dans le cas où le laps de temps (T) ne dépasse pas la valeur de seuil, que l'au moins un visiteur est identifié et authentifié et que l'au moins un visiteur est inscrit à l'événement,
- transmission du jeu de données d'événement (D-5) à une unité d'accueil de visiteurs (30),
- identification de l'au moins un visiteur en extrayant des deuxièmes données d'identité (D-6) de l'au moins un visiteur d'une carte d'identité de l'au moins un visiteur,
- génération d'un enregistrement d'images numériques (D-7) d'une image lumineuse se trouvant sur la carte d'identité de l'au moins un visiteur et génération d'un premier jeu de données biométriques (D-7'),
- génération d'un enregistrement d'images numériques (D-7) du visage de l'au moins un visiteur et génération d'un deuxième jeu de données biométriques (D-8'),
- authentification de l'au moins un visiteur en comparant le premier et le deuxième jeu de données biométriques (D-8'),
- vérification si l'au moins un visiteur est inscrit à un événement ce jour-là en comparant les deuxièmes données d'identité (D-6) à des premières données d'identité (D-4) qui sont contenues dans les jeux de données d'événement,
- accord d'une autorisation d'accès dans le cas où l'au moins un visiteur est inscrit et que l'événement a lieu le jour même,
- envoi (300) d'un premier SMS silencieux,
- réception (310) d'une réponse au premier SMS silencieux d'un téléphone mobile qui se trouve dans la zone protégée, la réponse comprenant un numéro SIM du téléphone mobile,
- stockage (320) du numéro SIM dans une mémoire de données conjointement avec les informations qu'un visiteur avec un téléphone mobile avec le numéro SIM correspondant se trouve dans la zone protégée.

11. Procédé selon la revendication 10, comprenant les étapes suivantes:
- extraction d'informations sur un événement d'un jeu de données de planification (D-1), les informations sur un événement comprenant des informations sur un événement et des coordonnées (D-2) de l'au moins un visiteur,
- transmission d'un message électronique à l'au moins un visiteur, le message comprenant un lien Web vers un portail Web, l'au moins un visiteur obtenant l'accès à une unité d'inscription (20) par le portail Web,
- réception de premières données d'identité (D-4) de l'au moins un visiteur par le portail Web,
- génération d'un jeu de données d'événement (D-5) sur la base du jeu de données de planification (D-1) et des premières données d'identité (D-4) transmises par l'au moins un visiteur.

12. Procédé selon la revendication 10 ou 11, comprenant les étapes suivantes :
- génération (191) d'un jeu de données de validation, le jeu de données de validation comprenant des informations sur la période de temps pendant laquelle l'au moins un visiteur est autorisé à entrer dans la zone protégée, et le jeu de données de validation comprenant le deuxième jeu de données biométriques (D-8'),
- transmission (200) du jeu de données de validation à une unité de contrôle d'accès (40),
- enregistrement (201) d'un enregistrement d'images numériques (D-7) de l'au moins un visiteur, qui s'approche de l'unité de contrôle d'accès (40),
- génération (205) d'un troisième jeu de données biométriques (D-10') à partir de l'enregistrement d'images numériques (D-7),
- vérification (210) s'il existe une validation pour l'au moins un visiteur en comparant le troisième jeu de données biométriques (D-10') au deuxième jeu de données biométriques (D-8'),
- vérification (220) si la validation est toujours valable en classant l'heure actuelle par rapport à la période de temps pendant laquelle l'au moins un visiteur est autorisé à entrer dans la zone protégée,
- octroi (240) d'un accès dans la zone protégée dans le cas où une validation valable est disponible pour l'au moins un visiteur.

13. Procédé selon l'une des revendications 10, 11 et 12, comprenant les étapes suivantes :
- génération d'un enregistrement d'images numériques (D-7) de l'au moins un visiteur qui souhaite quitter ou quitte ou a quitté la zone protégée,
- génération d'un quatrième jeu de données biométriques à partir de l'enregistrement d'images numériques (D-7),
- comparaison du quatrième et du troisième jeu de données biométriques (D-10') ou du quatrième et du deuxième jeu de données biométriques (D-8'), et
- en cas de concordance définie entre les jeux de données biométriques comparés, stockage dans une mémoire de données (35, 45) que l'au moins un visiteur quitte ou a quitté la zone protégée.

14. Procédé selon l'une des revendications 10, 11, 12 et 13, comprenant les étapes suivantes :
- envoi (330) d'un deuxième SMS silencieux,
- réception (340) d'une réponse au deuxième SMS silencieux d'un téléphone mobile, qui ne se trouve plus dans la zone protégée, la réponse comprenant le numéro SIM du téléphone mobile,
- stockage (350) du numéro SIM dans une mémoire de données (35, 45) conjointement avec l'information qu'un visiteur avec un téléphone mobile avec le numéro SIM correspondant ne se trouve plus dans la zone protégée, ou suppression de l'entrée qu'un visiteur avec un téléphone mobile avec le numéro SIM correspondant se trouve dans la zone protégée.

15. Produit de programme d'ordinateur comprenant un code de programme qui est stocké sur un support de données et qui amène un système comprenant une unité de gestion (10), une unité d'inscription (20) et une unité d'accueil de visiteurs (30) à exécuter les étapes suivantes lorsque le code de programme est chargé dans les mémoires de travail desdites unités,
- transmission d'un message électronique à au moins un visiteur d'un événement, le message donnant à l'au moins un visiteur l'accès à une unité d'inscription (20) par un réseau, l'événement étant caractérisé au moins par un emplacement d'événement et par une heure de début d'événement,
- réception par l'unité d'inscription (20) de données d'identité (D-4) de l'au moins un visiteur par le réseau,
- génération d'un jeu de données d'événement (D-5) sur la base des données d'identité (D-4) transmises par l'au moins un visiteur,
- transmission du jeu de données d'événement (D-5) à l'unité d'accueil de visiteurs (30),
- réception de données de l'au moins un visiteur par l'unité d'accueil de visiteurs (30) lorsque l'au moins un visiteur visite l'unité d'accueil de visites à une heure de visite,
- identification de l'au moins un visiteur à l'aide des données reçues,
- authentification de l'au moins un visiteur à l'aide des données reçues,
- vérification si l'au moins un visiteur est inscrit à l'événement,
- détermination d'un laps de temps (T) entre l'heure de début de l'événement et l'heure de visite,
- comparaison du laps de temps (T) à une valeur de seuil, et
- accord d'une autorisation d'accès à l'au moins un visiteur dans le cas où le laps de temps (T) ne dépasse pas la valeur de seuil, que l'au moins un visiteur est identifié et authentifié et que l'au moins un visiteur est inscrit à l'événement,
le produit de programme informatique, lorsqu'il est stocké dans la mémoire de travail d'un ou de plusieurs ordinateurs (80), amenant l'ordinateur ou les plusieurs ordinateurs (80) à exécuter le procédé selon l'une des revendications 10 à 14.
